# EUROPEAN PATENT APPLICATION

(11) **EP 4 848 564 A1**
(43) Date of publication of application: **02.12.2026**
(21) Application number: 24920147.6
(22) Date of filing: 04.12.2024
(51) Int. Cl.: H02M 7/493, H02M 7/48, H02P 27/06

(54) **ELECTRIC CIRCUIT AND CONTROL PROGRAM**

(30) Priority: 26.01.2024 JP 2024010540
(71) Applicant: Toyota Jidosha Kabushiki Kaisha, Toyota-shi, Aichi-ken 471-8571 (JP); DENSO Corporation, Kariya-shi, Aichi 448-8661 (JP)
(72) Inventor: AOYAGI, Shinsuke, Toyota-shi, Aichi 471-8571 (JP); TOYAMA, Keisuke, Kariya-shi, Aichi 448-8661 (JP); OMATA, Ryuji, Kariya-shi, Aichi 448-8661 (JP); MIYOSHI, Fumiyasu, Kariya-shi, Aichi 448-8661 (JP); KURACHI, Taisuke, Kariya-shi, Aichi 448-8661 (JP); SASAMA, Yuta, Kariya-shi, Aichi 448-8661 (JP)
(74) Representative: D Young & Co LLP
(86) International application number: PCT/JP2024/042920
(87) International publication number: WO 2025/158790

(57) **Abstract**

Electric power is bidirectionally transferred even when a first battery and a second battery are not connected in series. An electric circuit includes: a battery unit including a first battery and a second battery; a three-phase motor; an inverter circuit; and a switch circuit. In a first boost power transfer operation, electric power is transferred from the first battery to the second battery by repeatedly turning ON and OFF a second lower reverse-conducting switching element of a specific second series switch circuit in a state in which: a positive electrode of the first battery is connected to a first high potential line; a positive electrode of the second battery is connected to a second high potential line; and negative electrodes of the first battery and the second battery are connected to a first low potential line and a second low potential line. In a second boost power transfer operation, in the above state, electric power is transferred from the second battery to the first battery by repeatedly turning ON and OFF a first lower reverse-conducting switching element of a specific first series switch circuit.

## Description

### Technical Field

### (Cross-Reference to Related Applications)

This application claims priority to Japanese Patent Application No. 2024-010540 filed on January 26, 2024, the entire contents of which are hereby incorporated by reference into the present application.

The present invention relates to an electric circuit and a control program.

### Background Art

An electric circuit disclosed in Japanese Patent Application Publication No. 2020-120566 (hereinafter referred to as "Patent Document 1") has two batteries connected in series. This electric circuit has an inverter, which converts DC power output by the batteries into AC power and supplies it to a motor. The electric circuit is also capable of performing a power transfer operation of transferring electric power between the two batteries using coils of the motor. According to the technology of Patent Document 1, electric power can be transferred bidirectionally between the two batteries connected in series.

### Summary of Invention

### Technical Problem

According to the power transfer operation of Patent Document 1, electric power can be transferred between the two batteries connected in series. On the other hand, when the two batteries are not connected in series, the power transfer operation of Patent Document 1 cannot transfer electric power. The present teachings propose a technology that allows to transfer electric power bidirectionally between two batteries using coils of a motor even when the two batteries are not connected in series.

### Solution to Technical Problem

An electric circuit disclosed herein comprises a battery unit, a three-phase motor, an inverter circuit, and a switch circuit. The battery unit comprises a first battery and a second battery. The three-phase motor comprises three coils comprising a U-phase coil, a V-phase coil, and a W-phase coil. Each of the three coils has a first connection terminal arranged at one end thereof and a second connection terminal arranged at another end thereof. The inverter circuit is connected to the battery unit, the first connection terminal of the U-phase coil, the first connection terminal of the V-phase coil, and the first connection terminal of the W-phase coil. The switch circuit is configured to change connection among the second connection terminal of the U-phase coil, the second connection terminal of the V-phase coil, and the second connection terminal of the W-phase coil. The inverter circuit comprises: a first high potential line; a first low potential line; and three first series switch circuits respectively arranged for the three coils. Each of the three first series switch circuits comprises a first upper reverse-conducting switching element and a first lower reverse-conducting switching element, the first upper reverse-conducting switching element being a reverse-conducting switching element connected between the first connection terminal of corresponding one of the three coils and the first high potential line, and the first lower reverse-conducting switching element being a reverse-conducting switching element connected between the first connection terminal of the corresponding one of the three coils and the first low potential line. The switch circuit comprises: a second high potential line; a second low potential line; and at least one second series switch circuit. Each of the at least one second series switch circuit comprises a second upper reverse-conducting switching element and a second lower reverse-conducting switching element, the second upper reverse-conducting switching element being a reverse-conducting switching element connected between the second connection terminal of corresponding one of the three coils and the second high potential line, and the second lower reverse-conducting switching element being a reverse-conducting switching element connected between the second connection terminal of the corresponding one of the three coils and the second low potential line. One of the three coils is a specific coil, one of the three first series switch circuits that is connected to the specific coil is a specific first series switch circuit, one of the at least one second series switch circuit that is connected to the specific coil is a specific second series switch circuit. The electric circuit is configured to execute a first boost power transfer operation and a second boost power transfer operation. The first boost power transfer operation is an operation of transferring electric power from the first battery to the second battery by repeating ON and OFF of the second lower reverse-conducting switching element of the specific second series switch circuit in a state in which: a positive electrode of the first battery is connected to the first high potential line, a negative electrode of the first battery is connected to the first low potential line and the second low potential line, a positive electrode of the second battery is connected to the second high potential line, a negative electrode of the second battery is connected to the first low potential line and the second low potential line, the first upper reverse-conducting switching element of the specific first series switch circuit is ON, and the first lower reverse-conducting switching element of the specific first series switch circuit is OFF. The second boost power transfer operation is an operation of transferring electric power from the second battery to the first battery by repeating ON and OFF of the first lower reverse-conducting switching element of the specific first series switch circuit in a state in which: the positive electrode of the first battery is connected to the first high potential line, the negative electrode of the first battery is connected to the first low potential line and the second low potential line, the positive electrode of the second battery is connected to the second high potential line, the negative electrode of the second battery is connected to the first low potential line and the second low potential line, the second upper reverse-conducting switching element of the specific second series switch circuit is ON, and the second lower reverse-conducting switching element of the specific second series switch circuit is OFF.

In the present teachings, a reverse-conducting switching element means an element in which a switch and a diode are connected in parallel, with a cathode of the diode connected to a high potential-side terminal of the switch and an anode of the diode connected to a low potential-side terminal of the switch. The switch may be a semiconductor switching device such as a field effect transistor or an insulated gate bipolar transistor, for example. The diode may be a pn diode or a Schottky barrier diode. The switch and the diode may be disposed on a common semiconductor substrate or on separate semiconductor substrates. In the present teachings, a reverse-conducting switching element being "ON" means that a switch constituting the reverse-conducting switching element is "ON", and the reverse-conducting switching element being "OFF" means the switch constituting the reverse-conducting switching element is "OFF".

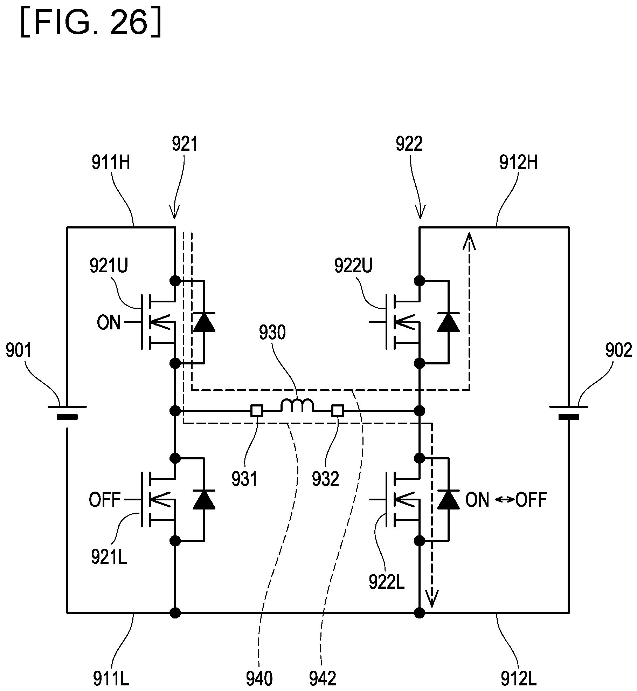

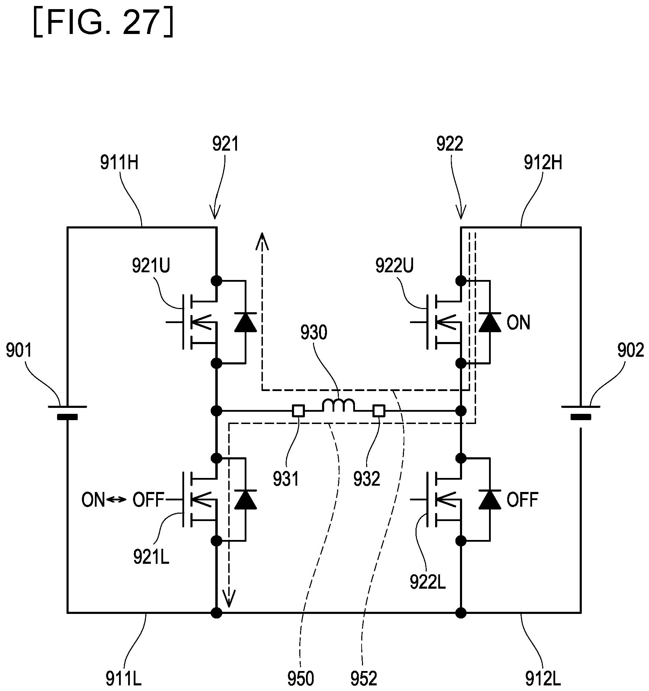

FIGS. 26 and 27 show equivalent circuits of electric circuit in the first and second boost power transfer operations. In FIGS. 26 and 27, reference sign 901 denotes the first battery, reference sign 902 denotes the second battery, reference sign 911H denotes the first high potential line, reference sign 911L denotes the first low potential line, reference sign 912H denotes the second high potential line, reference sign 912L denotes the second low potential line, reference sign 921 denotes the specific first series switch circuit, reference sign 921U shows the first upper reverse-conducting switching element of the specific first series switch circuit, reference sign 921L denotes the first lower reverse-conducting switching element of the specific first series switch circuit, reference sign 922 shows the specific second series switch circuit, reference sign 922U denotes the second upper reverse-conducting switching element of the specific second series switch circuit, reference sign 922L denotes the second lower reverse-conducting switching element of the specific second series switch circuit, reference sign 930 denotes the specific coil, reference sign 931 denotes the first connection terminal of the specific coil, and reference sign 932 denotes the second connection terminal of the specific coil.

As shown in FIG. 26, in the first boost power transfer operation, the first upper reverse-conducting switching element 921U of the specific first series switch circuit 921 is controlled to be ON and the first lower reverse-conducting switching element 921L of the specific first series switch circuit 921 is controlled to be OFF. The second lower reverse-conducting switching element 922L of the specific second series switch circuit 922 is controlled to repeat ON and OFF. When the second lower reverse-conducting switching element 922L is ON, as shown by arrow 940, a current flows from the first high potential line 911H to the low potential lines 911L and 912L via the first upper reverse-conducting switching element 921U, the specific coil 930, and the second lower reverse-conducting switching element 922L. When the second lower reverse-conducting switching element 922L is subsequently turned OFF, an induced voltage is generated in the specific coil 930 in an orientation along which a side of the specific coil 930 closer to the second terminal 932 is high potential. Therefore, as shown by arrow 942, a current flows from the first high potential line 911H to the second high potential line 912H via the first upper reverse-conducting switching element 921U, the specific coil 930, and the diode of the second upper reverse-conducting switching element 922U. As a result, electric power is transferred from the first battery 901 to the second battery 902. Thus, in the first boost power transfer operation, the electric circuit functions as a boost converter that transfers electric power from the first battery 901 to the second battery 902.

As shown in FIG. 27, in the second boost power transfer operation, the second upper reverse-conducting switching element 922U of the specific second series switch circuit 922 is controlled to be ON and the second lower reverse-conducting switching element 922L of the specific second series switch circuit 922 is controlled to be OFF. The first lower reverse-conducting switching element 921L of the specific first series switch circuit 921 is controlled to repeat ON and OFF. When the first lower reverse-conducting switching element 921L is ON, as shown by arrow 950, a current flows from the second high potential line 912H to the low potential lines 911L and 912L via the second upper reverse-conducting switching element 922U, the specific coil 930, and the first lower reverse-conducting switching element 921L. When the first lower reverse-conducting switching element 921L is subsequently turned OFF, an induced voltage is generated in the specific coil 930 in an orientation along which a side of the specific coil 930 closer to the first terminal 931 is high potential. Therefore, a current flows from the second high potential line 912H to the first high potential line 911H via the second upper reverse-conducting switching element 922U, the specific coil 930, and the diode of the first upper reverse-conducting switching element 921U, as shown by arrow 952. As a result, electric power is transferred from the second battery 902 to the first battery 901. Thus, in the second boost power transfer operation, the electric circuit functions as a boost converter that transfers electric power from the second battery 902 to the first battery 901.

As described above, the electric circuit disclosed herein can transfer electric power bidirectionally between the first and second batteries using the coils of the three-phase motor, even when the first and second batteries are not connected in series.

### Brief Description of Drawings

[FIG. 1] Circuit diagram of an electric circuit of an embodiment.
[FIG. 2] Circuit diagram of the electric circuit when the positions of diodes 71 and 73 are swapped.
[FIG. 3] An explanatory diagram of a first inverter operation.
[FIG. 4] An explanatory diagram of a second inverter operation.
[FIG. 5] A graph showing execution areas of the first and second inverter operations.
[FIG. 6] An explanatory diagram of a series charging operation.
[FIG. 7] An explanatory diagram of a series power supplying operation.
[FIG. 8] An explanatory diagram of a series power transfer operation.
[FIG. 9] An equivalent circuit diagram of the electric circuit in the series power transfer operation.
[FIG. 10] A graph showing a battery current when a SOC adjustment operation is performed alone.
[FIG. 11] A graph showing the battery current when a battery warming operation is performed alone.
[FIG. 12] A graph shows the battery current when the SOC adjustment operation and the charging operation are executed simultaneously.
[FIG. 13] A graph showing the battery current when the battery warming operation and the charging operation are performed simultaneously.
[FIG. 14] A graph showing the battery current when the SOC adjustment operation and the power supplying operation are executed simultaneously.
[FIG. 15] A graph showing the battery current when the battery warming operation and the power supplying operation are performed simultaneously.
[FIG. 16] An explanatory diagram of a parallel charging operation.
[FIG. 17] An explanatory diagram of a parallel power supplying operation.
[FIG. 18] An explanatory diagram of a non-series power transfer operation (first boost power transfer operation).
[FIG. 19] An explanatory diagram of a non-series power transfer operation (first buck power transfer operation).
[FIG. 20] An explanatory diagram of a non-series power transfer operation (second boost power transfer operation).
[FIG. 21] An explanatory diagram of a non-series power transfer operation (second buck power transfer operation).
[FIG. 22] A circuit diagram of an electric circuit of a variant.
[FIG. 23] A circuit diagram of an electric circuit of a variant.
[FIG. 24] A circuit diagram of an electric circuit of a variant.
[FIG. 25] A circuit diagram of an electric circuit of a variant.
[FIG. 26] A circuit diagram exemplifying the first boost power transfer operation.
[FIG. 27] A circuit diagram exemplifying the second boost power transfer operation. Description of Embodiments

Additional configurations of the electric circuit disclosed herein will be described below, with the configuration of the electric circuit disclosed herein being Configuration 1.

### (Configuration 2)

The electric circuit according to Configuration 1, wherein the electric circuit is configured to execute a first inverter operation, and the first inverter operation is an operation of supplying an alternating current to the three-phase motor by the inverter circuit in a state in which the second connection terminal of the U-phase coil, the second connection terminal of the V-phase coil, and the second connection terminal of the W-phase coil are short-circuited by the switch circuit.

### (Configuration 3)

The electric circuit according to Configuration 2, wherein, in the first inverter operation, the positive electrode of the first battery is connected to the first high potential line, the negative electrode of the first battery is connected to the positive electrode of the second battery, and the negative electrode of the second battery is connected to the first low potential line.

### (Configuration 4)

The electric circuit according to Configuration 2 or 3, wherein in the first inverter operation the positive electrode of the second battery is insulated from the second high potential line.

### (Configuration 5)

The electric circuit according to Configuration 2, wherein the switch circuit comprises three second series switch circuits respectively arranged for the three coils.

### (Configuration 6)

The electric circuit according to Configuration 5, wherein the electric circuit is configured to execute a second inverter operation, and the second inverter operation is an operation of supplying an alternating current to the three-phase motor by controlling a current of the U-phase coil by the first series switch circuit and the second series switch circuit that are connected to the U-phase coil, controlling a current of the V-phase coil by the first series switch circuit and the second series switch circuit that are connected to the V-phase coil, and controlling a current of the W-phase coil by the first series switch circuit and the second series switch circuit that are connected to the W-phase coil, in a state in which the first high potential line is connected to the second high potential line and the first low potential line is connected to the second low potential line.

According to this configuration, the three-phase motor can be rotated in the second inverter operation at a higher rotary speed or in a higher torque range than in the first inverter operation.

### (Configuration 7)

The electric circuit according to any of Configurations 2 to 4, wherein the switch circuit comprises three second series switch circuits respectively arranged for the three coils, and in the first inverter operation, the second upper reverse-conducting switching element of each of the three second series switch circuits is ON and the second lower reverse-conducting switching element of each of the three second series switch circuits is OFF.

According to this configuration, the second connection terminal of each coil of the three-phase motor can be short-circuited in the first inverter operation to form a neutral point by that short-circuited part.

### (Configuration 8)

The electric circuit according to any of Configurations 2 to 4, wherein the switch circuit comprises three second series switch circuits respectively arranged for the three coils, the electric circuit further comprises a low potential line switch connected between the first low potential line and the second low potential line, and in the first inverter operation, the second upper reverse-conducting switching element of each of the three second series switch circuits is ON, the second lower reverse-conducting switching element of each of the three second series switch circuits is ON, and the low potential line switch is OFF.

According to this configuration, in the first inverter operation, the second connection terminal of each coil of the three-phase motor can be short-circuited to form a neutral point by said short-circuited part.

### (Configuration 9)

The electric circuit according to any of Configurations 2 to 4, wherein the switch circuit comprises three second series switch circuits respectively arranged for the three coils, the electric circuit further comprises a low potential line switch connected between the first low potential line and the second low potential line, and in the first inverter operation, the second upper reverse-conducting switching element of each of the three second series switch circuits is OFF, the second lower reverse-conducting switching element of each of the three second series switch circuits is ON, and the low potential line switch is OFF.

According to this configuration, in the first inverter operation, the second connection terminal of each coil of the three-phase motor can be short-circuited to form a neutral point by that short-circuited part.

### (Configuration 10)

The electric circuit according to any of Configurations 2 to 4, further comprising: a first diode and a second diode connected in series between the first high potential line and the second high potential line; a first switch connected in parallel with the first diode; and a second switch connected in parallel with the second diode, wherein the first diode is arranged in an orientation along which a side of the first diode closer to the first high potential line is an anode, the second diode is arranged in an orientation along which a side of the second diode closer to the first high potential line is a cathode, the switch circuit comprises three second series switch circuits respectively arranged for the three coils, the electric circuit is configured to execute a second inverter operation, the second inverter operation is an operation of supplying an alternating current to the three-phase motor by controlling a current of the U-phase coil by the first series switch circuit and the second series switch circuit that are connected to the U-phase coil, controlling a current of the V-phase coil by the first series switch circuit and the second series switch circuit that are connected to the V-phase coil, and controlling a current of the W-phase coil by the first series switch circuit and the second series switch circuit that are connected to the W-phase coil, in a state in which the first high potential line is connected to the second high potential line and the first low potential line is connected to the second low potential line, in the second inverter operation, the first switch and the second switch are ON, and in the first inverter operation, the first switch is ON and the second switch is OFF, or the first switch and the second switch are OFF.

According to this configuration, an increase in a potential of the neutral point caused by a surge can be suppressed.

### (Configuration 11)

The electric circuit according to Configuration 1 or 2, further comprising: a high potential external connection terminal; and a low potential external connection terminal, wherein the electric circuit is configured to execute a parallel charge/discharge operation, and the parallel charge/discharge operation is an operation of performing at least one of charging and discharging electric power in parallel to the first battery and the second battery via the high potential external connection terminal and the low potential external connection terminal in a state in which: the positive electrode of the first battery is connected to the high potential external connection terminal via the first high potential line, the negative electrode of the first battery is connected to the low potential external connection terminal via the first low potential line, the positive electrode of the second battery is connected to the high potential external connection terminal via the second high potential line, and the negative electrode of the second battery is connected to the low potential external connection terminal via the first low potential line.

### (Configuration 12)

The electric circuit according to Configuration 11, wherein at least one of the first boost power transfer operation and the second boost power transfer operation is executable simultaneously with the parallel charge/discharge operation.

### (Configuration 13)

The electric circuit according to Configuration 1 or 2, further comprising: a high potential external connection terminal; and a low potential external connection terminal, wherein the electric circuit is configured to execute a series charge/discharge operation, and the series charge/discharge operation is an operation of performing at least one of charging and discharging electric power in series to the first battery and the second battery via the high potential external connection terminal and the low potential external connection terminal in a state in which: the positive electrode of the first battery is connected to the high potential external connection terminal via the first high potential line, the negative electrode of the first battery is connected to the positive electrode of the second battery, and the negative electrode of the second battery is connected to the low potential external connection terminal via the first low potential line.

### (Configuration 14)

The electric circuit according to Configuration 1 or 2, wherein the electric circuit is configured to execute a battery warming operation of increasing temperatures of the first battery and the second battery by alternately repeating the first boost power transfer operation and the second boost power transfer operation.

### (Configuration 15)

The electric circuit according to Configuration 1 or 2, wherein the electric circuit is configured to execute an SOC adjustment operation of adjusting states of charge of the first battery and the second battery by executing at least one of the first boost power transfer operation and the second boost power transfer operation.

### (Configuration 16)

The electric circuit according to Configuration 1 or 2, wherein, in the first boost power transfer operation, the second lower reverse-conducting switching element and the second upper reverse-conducting switching element of the specific second series switch circuit are alternately turned ON.

### (Configuration 17)

The electric circuit according to Configuration 1 or 2, wherein, in the first boost power transfer operation, the second upper reverse-conducting switching element of the specific second series switch circuit is maintained OFF.

### (Configuration 18)

The electric circuit according to Configuration 1 or 2, wherein, in the second boost power transfer operation, the first lower reverse-conducting switching element and the first upper reverse-conducting switching element of the specific first series switch circuit are alternately turned ON.

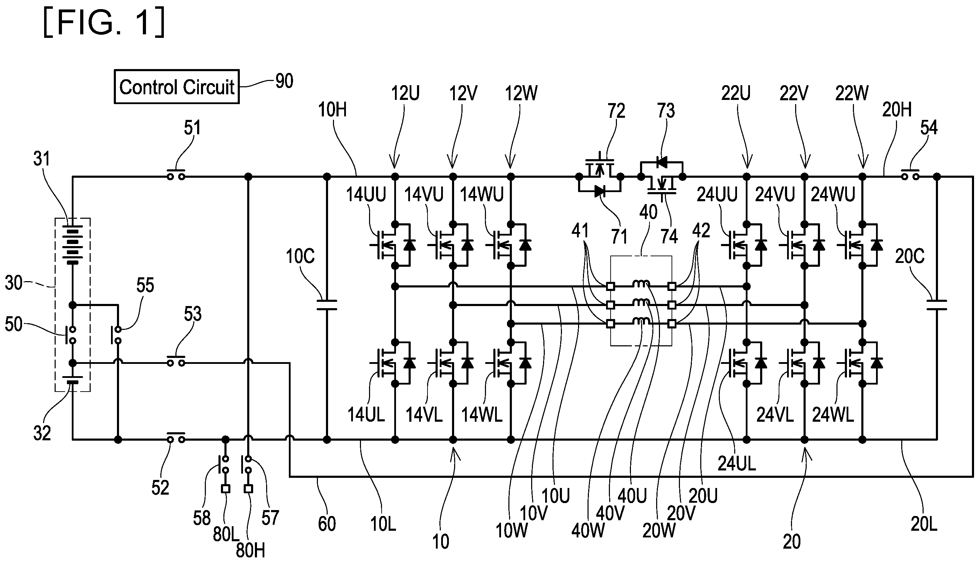

An electric circuit according to an embodiment shown in FIG. 1 is mounted in a vehicle. The embodiment electric circuit comprises a battery unit 30, a first inverter circuit 10, a second inverter circuit 20, and a three-phase motor 40. The three-phase motor 40 is a traction motor for a vehicle to run. The electric circuit converts DC power output by the battery unit 30 into AC power and supplies it to the three-phase motor 40 to run the vehicle.

The battery unit 30 has a first battery 31, a second battery 32, and a relay switch 50. The relay switch 50 is connected between a negative electrode of the first battery 31 and a positive electrode of the second battery 32. When the relay switch 50 is ON, the first battery 31 and the second battery 32 are connected in series. The first battery 31 and the second battery 32 each output a DC voltage of 400 V. When the first battery 31 and the second battery 32 are connected in series, a DC voltage of 800 V is output by the battery unit 30.

The three-phase motor 40 has a U-phase coil 40U, a V-phase coil 40V, and a W-phase coil 40W. Each of the coils 40U, 40V, and 40W is arranged in a stator of the three-phase motor 40. The rotor (not shown) of the three-phase motor 40 rotates when a current flowing through the coils 40U, 40V, and 40W is changed. A first connection terminal 41 is disposed at one end of each of the coils 40U, 40V, and 40W, and a second connection terminal 42 is disposed at the other end of each of the coils 40U, 40V, and 40W.

The first inverter circuit 10 is connected to the battery unit 30 and the first connection terminals 41 of the respective coils 40U, 40V, and 40W. The first inverter circuit 10 has a high potential line 10H, a low potential line 10L, and three output lines 10U, 10V, and 10W. The high potential line 10H is connected to the positive electrode of the first battery 31 via the relay switch 51. The low potential line 10L is connected to the negative electrode of the second battery 32 via the relay switch 52. A smoothing capacitor 10C is connected between the high potential line 10H and the low potential line 10L. The output line 10U is connected to the first connection terminal 41 of the coil 40U. The output line 10V is connected to the first connection terminal 41 of the coil 40V. The output line 10W is connected to the first connection terminal 41 of the coil 40W.

The first inverter circuit 10 has three series switch circuits 12U, 12V, and 12W. Each of the series switch circuits 12U, 12V, and 12W is a circuit composed of two reverse-conducting switching elements 14 connected in series. Each reverse-conducting switching element 14 has a structure where a switch (e.g., insulated gate bipolar transistor or field-effect transistor) and a diode (e.g., pn diode or Schottky barrier diode) are connected in anti-parallel. In each reverse-conducting switching element 14, the cathode of the diode is connected to the high potential terminal of the switch (i.e., collector or drain) and the anode of the diode is connected to the low potential terminal of the switch (i.e., emitter or source).

The series switch circuit 12U is arranged for the coil 40U. The series switch circuit 12U has a reverse-conducting switching element 14UU and a reverse-conducting switching element 14UL. The high potential terminal of the reverse-conducting switching element 14UU is connected to the high potential line 10H. The low potential terminal of the reverse-conducting switching element 14UU and the high potential terminal of the reverse-conducting switching element 14UL are connected to the first connection terminal 41 of the coil 40U via the output line 10U. The low potential terminal of the reverse-conducting switching element 14UL is connected to the low potential line 10L.

The series switch circuit 12V is arranged for the coil 40V. The series switch circuit 12V has a reverse-conducting switching element 14VU and a reverse-conducting switching element 14VL. The high potential terminal of the reverse-conducting switching element 14VU is connected to the high potential line 10H. The low potential terminal of the reverse-conducting switching element 14VU and the high potential terminal of the reverse-conducting switching element 14VL are connected to the first connection terminal 41 of the coil 40V via the output line 10V. The low potential terminal of the reverse-conducting switching element 14VL is connected to the low potential line 10L.

The series switch circuit 12W is arranged for the coil 40W. The series switch circuit 12W has a reverse-conducting switching element 14WU and a reverse-conducting switching element 14WL. The high potential terminal of the reverse-conducting switching element 14WU is connected to the high potential line 10H. The low potential terminal of the reverse-conducting switching element 14WU and the high potential terminal of the reverse-conducting switching element 14WL are connected to the first connection terminal 41 of the coil 40W via the output line 10W. The low potential terminal of the reverse-conducting switching element 14WL is connected to the low potential line 10L.

The second inverter circuit 20 is connected to the second connection terminal 42 of each of the coils 40U, 40V, and 40W. The second inverter circuit 20 has a high potential line 20H, a low potential line 20L, and three output lines 20U, 20V, and 20W. The low potential line 20L is connected to the low potential line 10L. The output line 20U is connected to the second connection terminal 42 of the coil 40U. The output line 20V is connected to the second connection terminal 42 of the coil 40V. The output line 20W is connected to the second connection terminal 42 of the coil 40W.

The second inverter circuit 20 has three series switch circuits 22U, 22V, and 22W. Each of the series switch circuits 22U, 22V, and 22W is a circuit composed of two reverse-conducting switching elements 24 connected in series. Each reverse-conducting switching element 24 has the same structure as each reverse-conducting switching element 14, with a switch and a diode connected in anti-parallel.

The series switch circuit 22U is arranged for the coil 40U. The series switch circuit 22U has a reverse-conducting switching element 24UU and a reverse-conducting switching element 24UL. The high potential terminal of the reverse-conducting switching element 24UU is connected to the high potential line 20H. The low potential terminal of the reverse-conducting switching element 24UU and the high potential terminal of the reverse-conducting switching element 24UL are connected to the second connection terminal 42 of the coil 40U via the output line 20U. The low potential terminal of the reverse-conducting switching element 24UL is connected to the low potential line 20L.

The series switch circuit 22V is arranged for the coil 40V. The series switch circuit 22V has a reverse-conducting switching element 24VU and a reverse-conducting switching element 24VL. The high potential terminal of the reverse-conducting switching element 24VU is connected to the high potential line 20H. The low potential terminal of the reverse-conducting switching element 24VU and the high potential terminal of the reverse-conducting switching element 24VL are connected to the second connection terminal 42 of the coil 40V via the output line 20V. The low potential terminal of the reverse-conducting switching element 24VL is connected to the low potential line 20L.

The series switch circuit 22W is arranged for the coil 40W. The series switch circuit 22W has a reverse-conducting switching element 24WU and a reverse-conducting switching element 24WL. The high potential terminal of the reverse-conducting switching element 24WU is connected to the high potential line 20H. The low potential terminal of the reverse-conducting switching element 24WU and the high potential terminal of the reverse-conducting switching element 24WL are connected to the second connection terminal 42 of the coil 40W via the output line 20W. The low potential terminal of the reverse-conducting switching element 24WL is connected to the low potential line 20L.

The electric circuit has wiring 60, relay switches 53, 54, and 55 and a smoothing capacitor 20C. The relay switch 53 is disposed between the wiring 60 and the positive electrode of the second battery 32. When the relay switch 53 is ON, the wiring 60 is connected to the positive electrode of the second battery 32. The relay switch 54 is disposed between the wiring 60 and the high potential line 20H. When the relay switch 54 is ON, the wiring 60 is connected to the high potential line 20H. The relay switch 55 is disposed between the negative electrode of the first battery 31 and the negative electrode of the second battery 32. When the relay switch 55 is ON, the negative electrode of the first battery 31 is connected to the negative electrode of the second battery 32. The smoothing capacitor 20C is connected between the wiring 60 and the low potential line 20L.

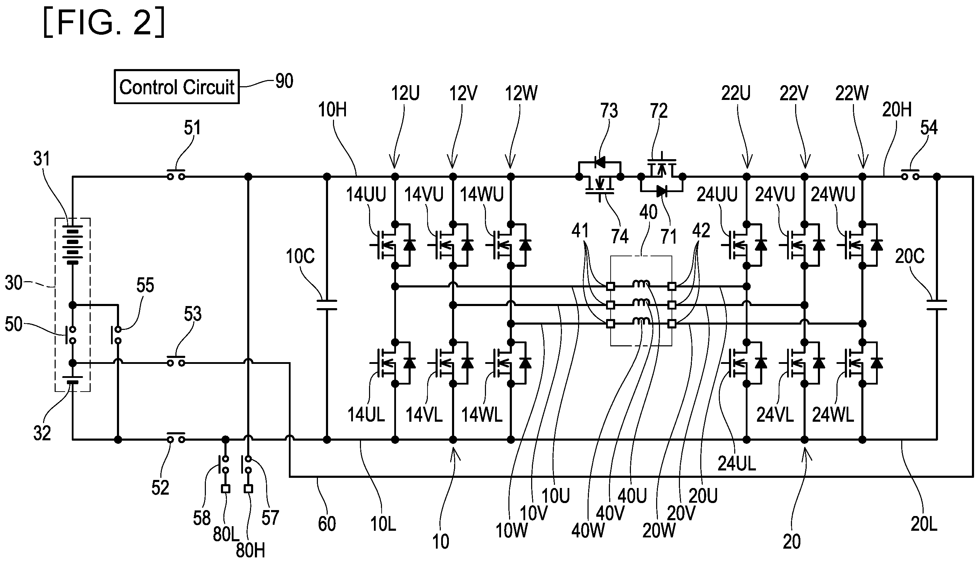

The electric circuit has a diode 71, a switching element 72, a diode 73, and a switching element 74. The diode 71 and the diode 73 are connected in series between the high potential line 10H and the high potential line 20H. The anode of the diode 71 is connected to the high potential line 10H, the cathode of the diode 71 is connected to the cathode of the diode 73, and the anode of the diode 73 is connected to the high potential line 20H. That is, the diode 71 is arranged in an orientation along which a side of the diode 71 closer to the high potential line 10H is the anode, and the diode 73 is arranged in an orientation along which a side of the diode 73 closer to the high potential line 10H is the cathode. The switching element 72 is connected in parallel to the diode 71. The switching element 72 and the diode 71 may be composed of reverse-conducting switching elements. The switching element 74 is connected in parallel to the diode 73. The switching element 74 and the diode 73 may be composed of reverse-conducting switching elements. As shown in FIG. 2, the positions of a set of the diode 71 and the switching element 72 and a set of the diode 73 and the switching element 74 may be swapped.

When the switching elements 72 and 74 are both ON, the high potential line 10H and the high potential line 20H are short-circuited therebetween. When the switching elements 72 and 74 are both OFF, the high potential line 10H and the high potential line 20H are isolated. When the switching element 72 turns on and the switching element 74 turns OFF, a current can flow from the high potential line 20H to the high potential line 10H via the diode 73 and the switching element 72, while the current cannot flow in the opposite direction therefrom.

The electric circuit has a high potential external connection terminal 80H, a low potential external connection terminal 80L, and relay switches 57 and 58. The high potential external connection terminal 80H is connected to the high potential line 10H via the relay switch 57. The low potential external connection terminal 80L is connected to the low potential line 10L via the relay switch 58. The high potential external connection terminal 80H and the low potential external connection terminal 80L are connected to equipment external to the vehicle.

The electric circuit has a control circuit 90. The control circuit 90 is connected to gates of the switching elements constituting each of the reverse-conducting switching elements 14 and 24 and controls these switching elements. The control circuit 90 also controls the switching elements 72, 74 and the relay switches 50, 51, 52, 53, 54, 55, 57, and 58. The control circuit 90 has a CPU and a memory, for example. The memory of the control circuit 90 has a program to control each part of the electric circuit stored therein. The control circuit 90 performs each of the operations described below according to the program.

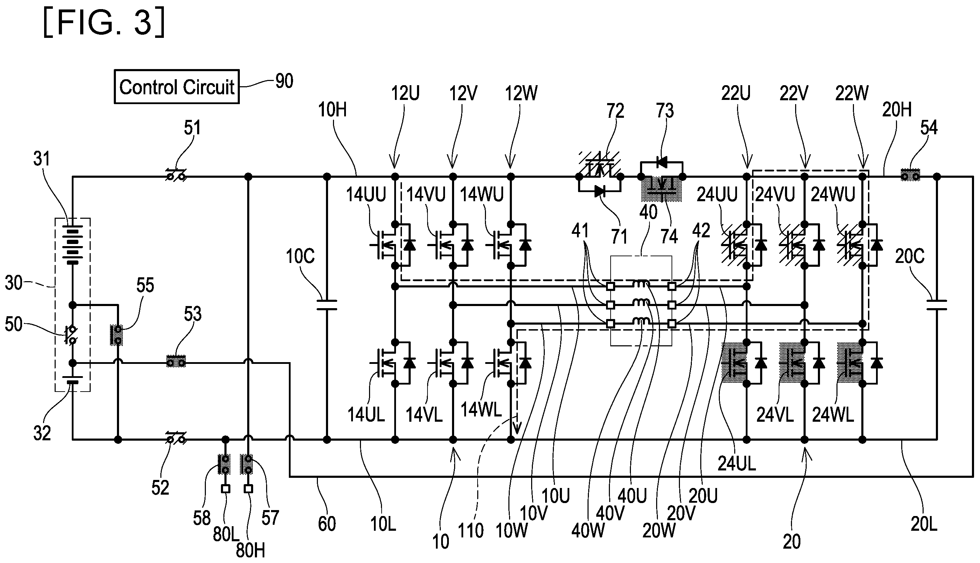

Next, various operations of the electric circuit will be described. In FIGS. 3, 4, 6 to 8, 16, 17, and 22 to 24, switches that are controlled to be constantly OFF are indicated by dotted hatching, and switches that are controlled to be constantly on are indicated by diagonal hatching. Switches not hatched in FIGS. 3, 4, 6 to 8, 16, 17, and 22 to 24, are switches that are controlled by the control circuit 90 as needed.

### (First Inverter Operation)

The electric circuit can perform a first inverter operation of driving the three-phase motor 40. In the first inverter operation, as shown in FIG. 3, the control circuit 90 controls the relay switches 50, 51, 52, the switching element 72, and the reverse-conducting switching elements 24UU, 24VU, 24VW to be ON, and controls the relay switches 53, 54, 55, 57, and 58, the switching element 74, and the reverse-conducting switching elements 24UL, 24VL, and 24WL to be OFF. In this state, the control circuit 90 supplies an alternating current to the three-phase motor 40 by switching each of the reverse-conducting switching elements 14 of the first inverter circuit 10.

By the relay switch 51 being ON, the positive electrode of the first battery 31 is connected to the high potential line 10H. By the relay switch 50 being ON, the negative electrode of the first battery 31 is connected to the positive electrode of the second battery 32. By the relay switch 52 being ON, the negative electrode of the second battery 32 is connected to the low potential line 10L. Therefore, DC voltage (i.e., 800 V) output by the series circuit of the first battery 31 and the second battery 32 is applied between the high potential line 10H and the low potential line 10L. Because the reverse-conducting switching elements 24UU, 24VU, and 24VW are controlled to be ON, the second connection terminals 42 of the coils 40U, 40V, and 40W are short-circuited through the high potential line 20H. That is, the high potential line 20H functions as a neutral point. By the reverse-conducting switching elements 24UL, 24VL, and 24VL being OFF, the high potential line 20H (i.e., the neutral point) is isolated from the low potential lines 10L and 20L (i.e., 0 V potential). Also, by the relay switches 53 and 54 being OFF, the high potential line 20H (i.e., the neutral point) is isolated from the positive electrode of the second battery 32 (i.e., 400 V potential). Also, by the switching element 74 being OFF, the high potential line 20H (i.e., the neutral point) is isolated from the high potential line 10H (i.e., 800 V potential). Thus, the potential of the high potential line 20H (i.e., the neutral point) is independent of each of the other potentials. The potential of the high potential line 20H varies between 0 V and 800 V. When the potential of the high potential line 20H exceeds 800 V due to a surge, the diode 73 turns ON and current flows from the high potential line 20H to the high potential line 10H via the diode 73 and the switching element 72. Thus, the potential of the high potential line 20H can be prevented from becoming excessively high.

If there is no need to release the current from the high potential line 20H to the high potential line 10H when the potential of the high potential line 20H rises, both the switching elements 72 and 74 may be controlled to be OFF in the first inverter operation.

As described above, in the first inverter operation, the control circuit 90 switches each of the reverse-conducting switching elements 14 of the first inverter circuit 10. The operation of the first inverter circuit 10 in the first inverter operation is similar to that of a typical inverter. For example, as shown by arrow 110 in FIG. 3, when the reverse-conducting switching elements 14UU and 14WL are ON, a current flows from the high potential line 10H to the low potential line 10L via the coil 40U, the neutral point, and the coil 40W. The control circuit 90 controls the current flowing in the coils 40U, 40V, and 40W by causing each of the reverse-conducting switching elements 14 of the first inverter circuit 10 to switch and supply a three-phase AC current to the three-phase motor 40. This drives the three-phase motor 40. In the first inverter operation, the current path passes through the two coils as exemplified by arrow 110.

### (Second Inverter Operation)

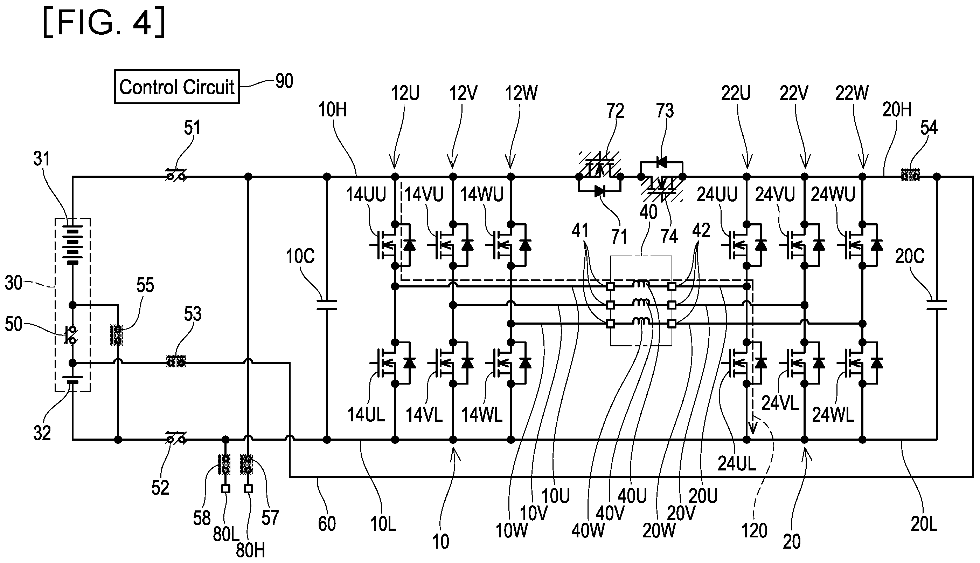

The electric circuit can perform a second inverter operation of driving the three-phase motor 40. The second inverter operation is an inverter operation to drive the three-phase motor 40 at a higher rotary speed or higher torque than the first inverter operation. In the second inverter operation, the control circuit 90 controls the relay switches 50, 51, and 52 and the switching elements 72, 74 to be ON and controls the relay switches 53, 54, 55, 57, and 58 to be OFF, as shown in FIG. 4. In this state, the control circuit 90 supplies an alternating current to the three-phase motor 40 by switching each reverse-conducting switching element 14 of the first inverter circuit 10 and each reverse-conducting switching element 24 of the second inverter circuit 20.

By the relay switches 50, 51, and 52 being ON, the DC voltage (i.e., 800 V) output by the series circuit of the first battery 31 and the second battery 32 is applied between the high potential line 10H and the low potential line 10L. By the switching elements 72 and 74 being ON, the high potential line 10H and the high potential line 20H are short-circuited therebetween. That is, the potentials of the high potential line 20H and the high potential line 10H become equal.

As described above, in the second inverter operation, the control circuit 90 switches each reverse-conducting switching element 14 of the first inverter circuit 10 and each reverse-conducting switching element 24 of the second inverter circuit 20. The control circuit 90 controls the current flowing in the coil 40U by the series switch circuit 12U and the series switch circuit 22U. When the reverse-conducting switching elements 14UU and 24UL are ON and the reverse-conducting switching elements 24UU and 14UL are OFF, the current flows in the coil 40U from the first connection terminal 41 to the second connection terminal 42, as shown by arrow 120 in FIG. 4. When the reverse-conducting switching elements 24UU and 14UL are ON and the reverse-conducting switching elements 14UU and 24UL are OFF, the current flows in the coil 40U from the second connection terminal 42 toward the first connection terminal 41. As such, the control circuit 90 controls the current flowing in the coil 40U by the two series switch circuits 12U and 22U (i.e., the reverse-conducting switching elements 14UU, 14UL, 24UU, and 24UL). Similarly, the control circuit 90 controls the current flowing in the coil 40V by the two series switch circuits 12V and 22V and the current flowing in the coil 40W by the two series switch circuits 12W and 22W. Thus, the control circuit 90 controls the current flowing in the coils 40U, 40V, and 40W by switching the respective reverse-conducting switching elements 14 and 24 of the first inverter circuit 10 and the second inverter circuit 20 to supply a three-phase AC current to the three-phase motor 40. This drives the three-phase motor 40.

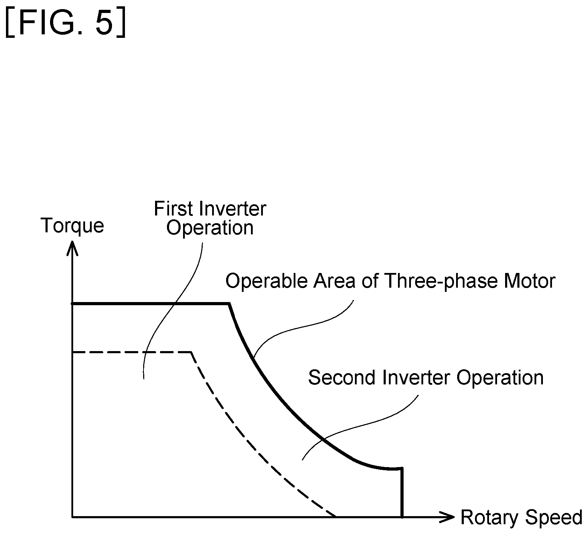

As exemplified by arrow 120 in FIG. 4, in the second inverter operation, the current path passes through one coil. On the other hand, in the first inverter operation, as exemplified by arrow 110 in FIG. 3, the current path passes through two coils. Therefore, in the second inverter operation, a higher voltage can be applied to each coil than in the first inverter operation. As shown in FIG. 5, the control circuit 90 executes the first inverter operation when the rotary speed and torque of the three-phase motor 40 are low and executes the second inverter operation when at least one of the rotary speed and the torque of the three-phase motor 40 is high. When the rotary speed of the three-phase motor 40 is high, high back electromotive force is generated in each coil 40U, 40V, and 40W. By executing the second inverter operation when the rotary speed of the three-phase motor 40 is high, an even higher voltage than the back electromotive force can be applied to each coil 40U, 40V, and 40W. This allows the three-phase motor 40 to be driven at a higher rotary speed.

### (Series Charging Operation)

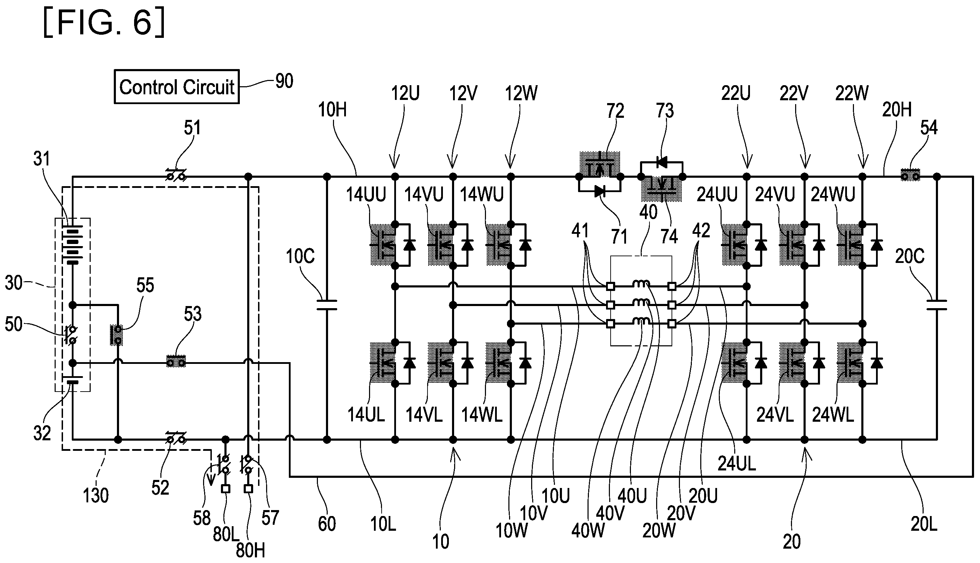

There may be a case where an external quick charging equipment is connected to the high potential external connection terminal 80H and the low potential external connection terminal 80L. The quick charging equipment applies a high voltage higher than 800 V between the high potential external connection terminal 80H and the low potential external connection terminal 80L. When the quick charging equipment is connected to the high potential external connection terminal 80H and the low potential external connection terminal 80L, the control circuit 90 performs a series charging operation. In the series charging operation, the control circuit 90 controls the relay switches 50, 51, 52, 57, and 58 to be ON and controls the relay switches 53, 54, and 55 to be OFF, as shown in FIG. 6. By the relay switch 51 being ON, the positive electrode of the first battery 31 is connected to the high potential line 10H. By the relay switch 50 being ON, the negative electrode of the first battery 31 is connected to the positive electrode of the second battery 32. By the relay switch 52 being ON, the negative electrode of the second battery 32 is connected to the low potential line 10L. By the relay switches 57 and 58 being ON, the high voltage output by the quick charging equipment is applied between the high potential line 10H and the low potential line 10L. Thus, current flows as shown by arrow 130 in FIG. 6, and the series-connected batteries 31 and 32 are charged.

While the control circuit 90 can perform the series charging operation alone, the control circuit 90 can also perform the series charging operation in combination with a SOC adjustment operation or battery warming operation that will be described below. When performing the series charging operation alone, the control circuit 90 controls all the reverse-conducting switching elements 14 and 24 to be OFF and controls the switching elements 72 and 74 to be OFF as shown in FIG. 6.

### (Series Power Supplying Operation)

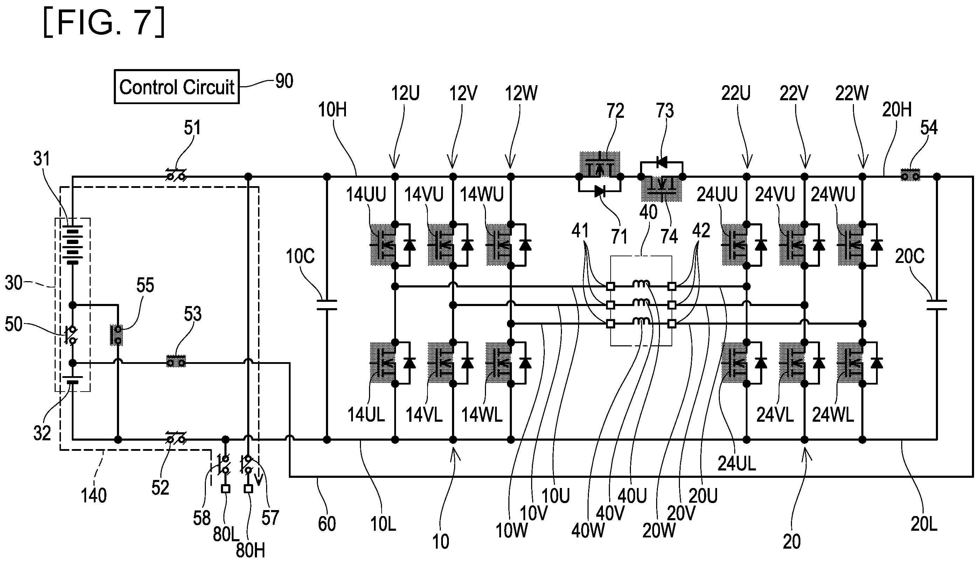

External power supplying target equipment (e.g., household storage battery) may be connected to the high potential external connection terminal 80H and the low potential external connection terminal 80L. The control circuit 90 executes a series power supplying operation when the operating (use) voltage of the power supplying target equipment is high. In the series power supplying operation, the control circuit 90 controls the relay switches 50, 51, 52, 57, and 58 to be ON and controls the relay switches 53, 54, and 55 to be OFF, as shown in FIG. 7. The voltage output by the series circuit of the first battery 31 and the second battery 32 is then applied to the power supplying target equipment, and a current flows to supply power to the power supplying target equipment, as shown by arrow 140 in FIG. 7.

While the control circuit 90 can perform the series power supplying operation alone, the control circuit 90 can also perform the series power supplying operation in combination with the SOC adjustment operation or battery warming operation that will be described below. When performing the series power supplying operation alone, control circuit 90 controls all the reverse-conducting switching elements 14 and 24 to be OFF and controls the switching elements 72 and 74 to be OFF as shown in FIG. 7.

### (Series Power Transfer Operation)

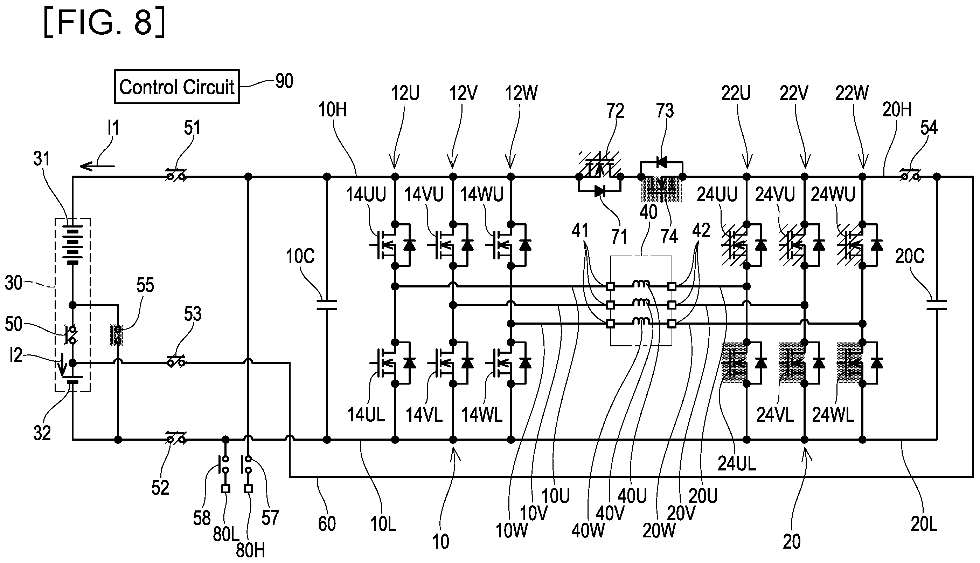

A series power (power for series connection) transfer operation is an operation of transferring electric power between the first battery 31 and the second battery 32 in a state where the first battery 31 and the second battery 32 are connected in series. In the series power transfer operation, as shown in FIG. 8, the control circuit 90 controls the relay switches 50, 51, 52, 53, and 54, the switching element 72, and the reverse-conducting switching elements 24UU, 24VU, and 24WU to be ON, and controls the relay switch 55, the switching element 74, and the reverse-conducting switching elements 24UL, 24VL, and 24WL to be OFF. In this state, the control circuit 90 switches each of the reverse-conducting switching elements 14 of the first inverter circuit 10. In the series power transfer operation, the electric circuit operates as a buck/boost converter which uses each of the coils 40U, 40V, and 40W. If there is no need to release a current from the high potential line 20H to the high potential line 10H when the potential of the high potential line 20H rises, the switching elements 72 and 74 may both be controlled to be OFF in the series power transfer operation.

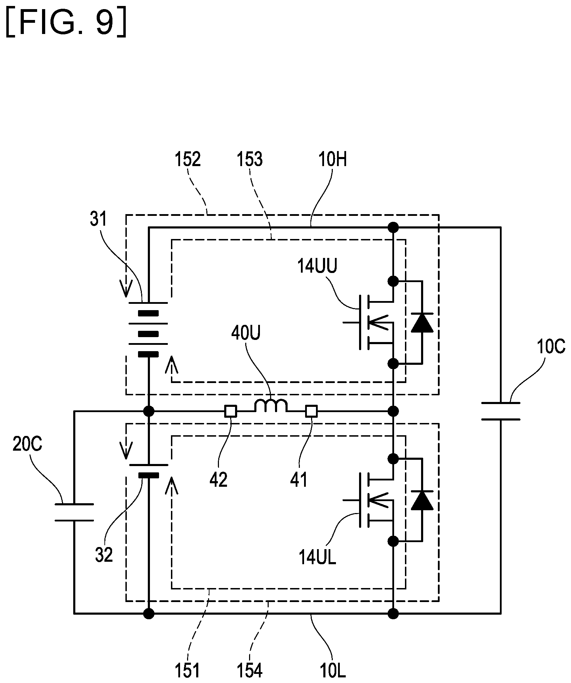

FIG. 9 shows an equivalent circuit of the part that functions as a buck/boost converter which uses the coil 40U in the series power transfer operation. The control circuit 90 controls the current flowing in the coil 40U by switching the reverse-conducting switching elements 14UU and 14UL. The control circuit 90 repeatedly turns ON and OFF the reverse-conducting switching elements 14UU and 14UL. For example, the control circuit 90 turns ON and OFF alternately the reverse-conducting switching elements 14UU and 14UL. When the reverse-conducting switching element 14UL is ON, a current flows from the positive electrode of the second battery 32 to the negative electrode of the second battery 32 via the coil 40U and the reverse-conducting switching element 14UL as shown by arrow 151. When the reverse-conducting switching element 14UL is then OFF, an induced electromotive force is generated in the coil 40U in an orientation along which a side of the coil 40U closer to the first connection terminal 41 is high potential. As a result, as shown by arrow 152, the current flows from the negative electrode of the first battery 31 to the positive electrode of the first battery 31 via the coil 40U and the diode of the reverse-conducting switching element 14UU. Thus, when the current flows alternately in the paths of arrows 151 and 152, power is transferred from the second battery 32 to the first battery 31. When the reverse-conducting switching element 14UU is ON, current flows from the positive electrode of the first battery 31 to the negative electrode of the first battery 31 via the reverse-conducting switching element 14UU and the coil 40U as shown by arrow 153. When the reverse-conducting switching element 14UU is then OFF, an induced electromotive force is generated in the coil 40U in an orientation along which a side of the coil 40U closer to the second connection terminal 42 is high potential. As a result, as shown by arrow 154, the current flows from the negative electrode of the second battery 32 to the positive electrode of the second battery 32 via the diode of the reverse-conducting switching element 14UL and the coil 40U. Thus, when the current flows alternately in the paths of arrows 153 and 154, power is transferred from the first battery 31 to the second battery 32.

The control circuit 90 can also perform the power transfer described in FIG. 9 using the coils 40V and 40W. For example, power transfer may be performed simultaneously by the coils 40U, 40V, and 40W, or power transfer may be performed by the coils 40U, 40V, and 40W at different timings. The control circuit 90 may also perform the power transfer described in FIG. 9 using one or two of the three coils 40U, 40V, and 40W.

The control circuit 90 can perform a SOC adjustment operation and a battery warming operation as the series power transfer operations.

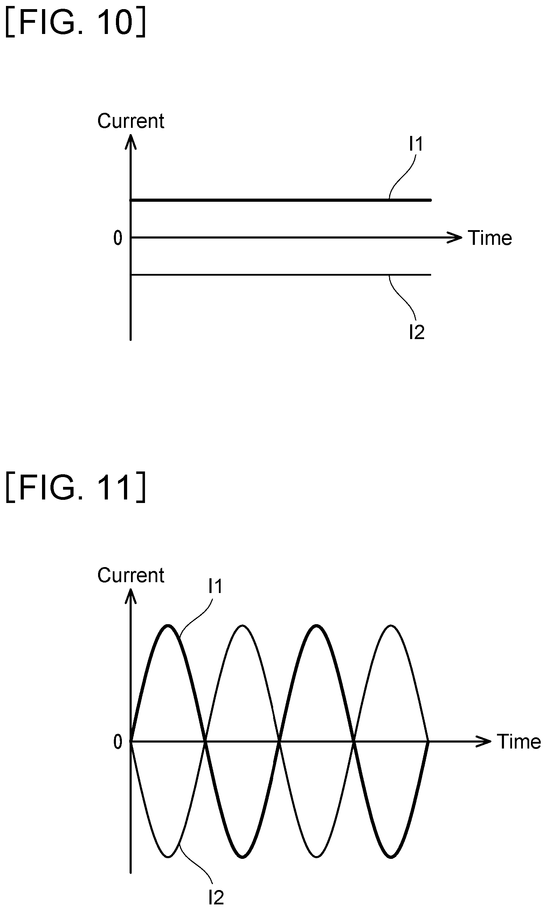

In the SOC adjustment operation, the control circuit 90 adjusts a SOC (State Of Charge, also called charge rate) of the first battery 31 and the second battery 32 to a target value by transferring electric power between the first battery 31 and the second battery 32 by the power transfer described in FIG. 9. In the SOC adjustment operation, the control circuit 90 may transfer power between the first battery 31 and the second battery 32 from the one with a higher SOC to the one with a lower SOC, or from the one with a lower SOC to the one with a higher SOC. As exemplified in FIG. 10, in the SOC adjustment operation, the control circuit 90 controls the current such that a current I1 flowing in the first battery 31 and a current I2 flowing in the second battery 32 are approximately constant. The current I1 flowing in the first battery 31 and the current I2 flowing in the second battery 32 are shown with an orientation along which they are charged as positive.

In the battery warming operation, the control circuit 90 alternately transfers power from the first battery 31 to the second battery 32 and from the second battery 32 to the first battery 31 by the power transfer described in FIG. 9. FIG. 11 shows the current I1 and current I2 in the battery warming operation. As shown in FIG. 11, the control circuit 90 changes the current I1 in the first battery 31 and current I2 in the second battery 32 to be sinusoidal. When the current is changed in this manner, charging and discharging are repeated in the first battery 31 and the second battery 32, respectively, and the temperatures of the first battery 31 and the second battery 32 rise. If performance of the batteries 31 and 32 is degraded due to low temperatures, the battery warming operation can restore the performance of the batteries 31 and 32.

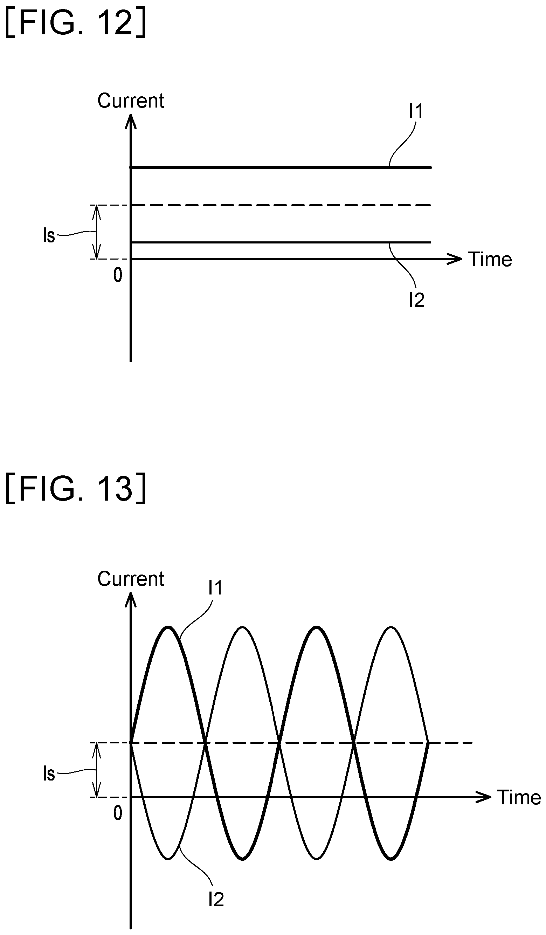

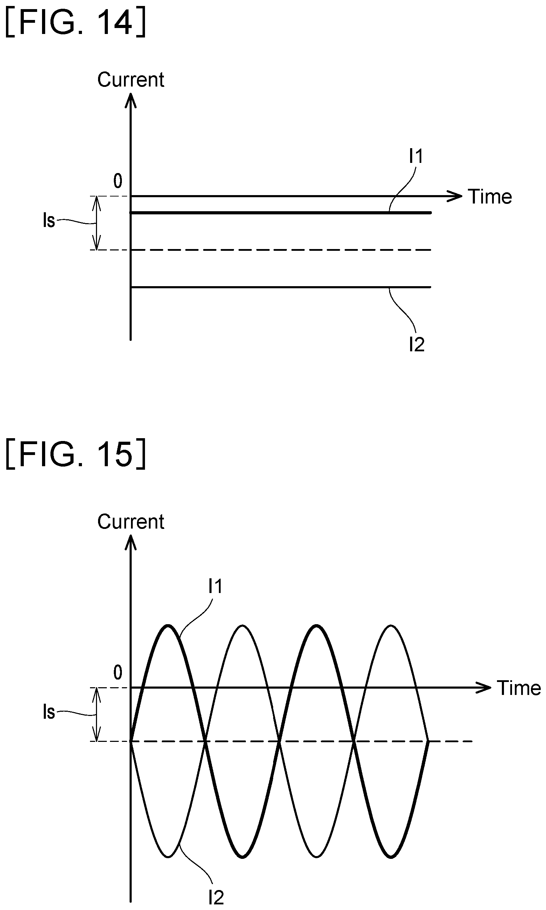

The control circuit 90 can perform the series charging operation or the series power supplying operation together with the series power transfer operation (i.e., the SOC adjustment operation or the battery warming operation described above). When executing the series power transfer operation and the series charging operation simultaneously, the control circuit 90 turns ON the relay switches 57 and 58 with external quick charging equipment connected to the high potential external connection terminal 80H and the low potential external connection terminal 80L, and further executes the series power transfer operation (i.e., the SOC operation or the battery warming operation). The current then flows as shown by arrow 130 in FIG. 6, and simultaneously the current generated by the coils 40U, 40V, and 40W flows. When the series charging operation and the SOC adjustment operation are executed simultaneously, the current I1 and current I2 shift upward by the amount of current Is that is supplied externally (supplied from an external source), as shown in FIG. 12. When the series charging operation and the battery warming operation are executed simultaneously, the current I1 and current I2 shift upward by the amount of the current Is supplied externally, as shown in FIG. 13. When simultaneously executing the series power transfer operation and the series power supplying operation, the control circuit 90 turns ON the relay switches 57 and 58 with the external power supplying target equipment connected to the high potential external connection terminal 80H and the low potential external connection terminal 80L, and further executes the series power transfer operation (i.e., the SOC adjustment operation or the battery warming operation). Then the current flows as shown by arrow 140 in FIG. 7, and simultaneously the current generated by the coils 40U, 40V, and 40W flows. When the series power supplying operation and the SOC adjustment operation are executed simultaneously, the current I1 and current I2 shift downward by the amount of the current Is supplied to external, as shown in FIG. 14. When the series power supplying operation and battery warming operation are executed simultaneously, the current I1 and current I2 shift downward by the amount of the current Is supplied to external, as shown in FIG. 15.

As described above, the electric circuit of the embodiment can perform the SOC adjustment operation or the battery warming operation while the series charging operation or the series power supplying operation is ongoing. The control circuit 90 can also perform the series power transfer operation (i.e., the SOC adjustment operation or the battery warming operation) alone. In this case, the control circuit 90 controls the relay switches 57 and 58 to be OFF.

### (Parallel Charging Operation)

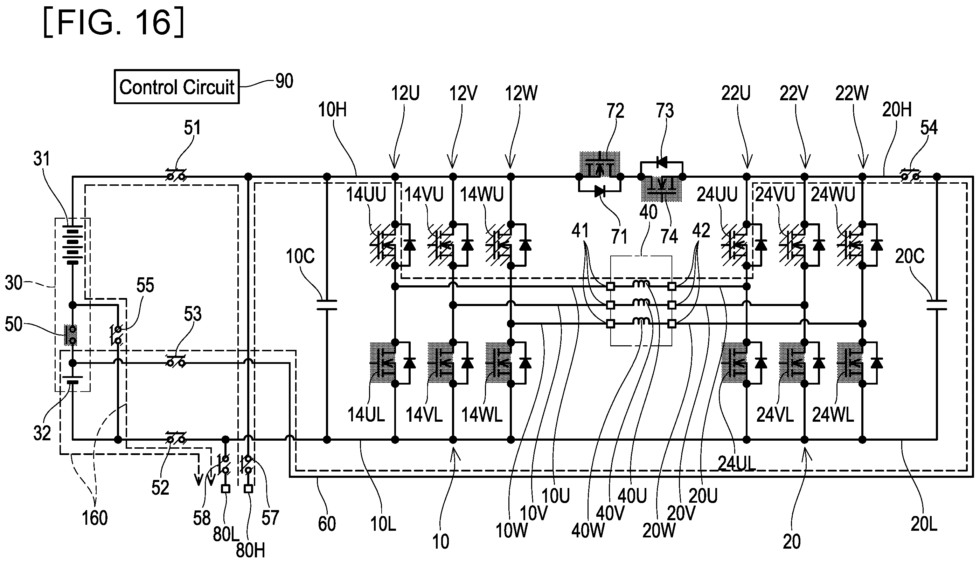

External general charging equipment may be connected to the high potential external connection terminal 80H and the low potential external connection terminal 80L. The general charging equipment applies a voltage higher than 400 V and lower than 800 V between the high potential external connection terminal 80H and the low potential external connection terminal 80L. When the general charging equipment is connected to the high potential external connection terminal 80H and the low potential external connection terminal 80L, the control circuit 90 executes a parallel charging operation. In the parallel charging operation, as shown in FIG. 16, the control circuit 90 controls the relay switches 51, 52, 53, 54, 55, 57, and 58 and the reverse-conducting switching elements 14UU, 14VU, 14WU, 24UU, 24VU, and 24WU to be ON, and controls the relay switch 50, the switching elements 72, 74, and the reverse-conducting switching elements 14UL, 14VL, 14WL, 24UL, 24VL, and 24WL to be OFF. The positive electrode of the first battery 31 is connected to the high potential external connection terminal 80H via the relay switches 51 and 57. The negative electrode of the first battery 31 is connected to the low potential external connection terminal 80L via the relay switches 55, 52, and 58. The positive electrode of the second battery 32 is connected to the high potential external connection terminal 80H via the relay switches 53, 54, the reverse-conducting switching elements 24UU-24WU, the coils 40U-40W, the reverse-conducting switching elements 14UU-14WU, and the relay switch 57. The negative electrode of the second battery 32 is connected to the low potential external connection terminal 80L via the relay switches 52 and 58. That is, the first battery 31 and the second battery 32 are connected in parallel between the high potential external connection terminal 80H and the low potential external connection terminal 80L. Due to this, a current flows as shown by arrow 160 in FIG. 16, and the parallel-connected batteries 31 and 32 are charged. In FIG. 16, only a path through the coil 40U is shown as a charging path to the second battery 32.

While the control circuit 90 can perform the parallel charging operation alone, the control circuit 90 can also perform the parallel charging operation in combination with the SOC adjustment operation or the battery warming operation that will be described below.

### (Parallel Power Supplying Operation)

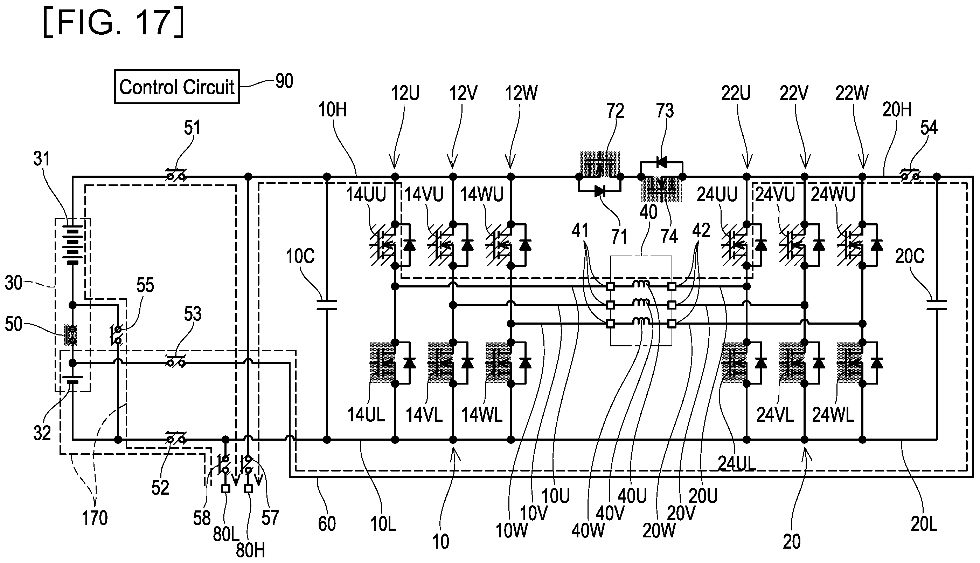

External power supplying target equipment may be connected to the high potential external connection terminal 80H and the low potential external connection terminal 80L. The control circuit 90 executes a parallel power supplying operation when the operating voltage of the power supplying target equipment is low. In the parallel power supplying operation, as shown in FIG. 17, the control circuit 90 controls the relay switches 51, 52, 53, 54, 55, 57, and 58 and the reverse-conducting switching elements 14UU, 14VU, 14WU, 24UU, 24VU, and 24WU to be ON, and controls the relay switch 50, the switching elements 72, 74, and the reverse-conducting switching elements 14UL, 14VL, 14WL, 24UL, 24VL, and 24WL to be OFF. Therefore, the first battery 31 and the second battery 32 are connected in parallel between the high potential external connection terminal 80H and the low potential external connection terminal 80L. Due to this, a current flows as shown by arrow 170 in FIG. 17, and power is supplied to the power supplying target equipment from the parallel-connected batteries 31 and 32. In FIG. 17, only a path through the coil 40U is shown as the power supply path by the second battery 32.

While the control circuit 90 can perform the parallel power supplying operation alone, the control circuit 90 can also perform the parallel power supplying operation in combination with the SOC adjustment operation or the battery warming operation that will be described below.

### (Non-Series Power Transfer Operation)

A non-series power (power for non-series connection) transfer operation is an operation of transferring electric power between the first battery 31 and the second battery 32 in a state where the first battery 31 and the second battery 32 are not connected in series. In the non-series power transfer operation, the control circuit 90 controls the relay switches 51, 52, 53, 54, and 55 to be ON and controls the relay switch 50 and the switching elements 72 and 74 to be OFF. By the relay switch 51 being ON, the positive electrode of the first battery 31 is connected to the high potential line 10H. By the relay switches 55 and 52 being ON, the negative electrode of the first battery 31 is connected to the low potential line 10L and the low potential line 20L. By the relay switches 53 and 54 being ON, the positive electrode of the second battery 32 is connected to the high potential line 20H. By the relay switch 52 being ON, the negative electrode of the second battery 32 is connected to the low potential line 10L and the low potential line 20L. In this connection state, the electric circuit operates as buck/boost converters which use the coils 40U, 40V, and 40W, respectively. The buck/boost converter which uses the coil 40U (hereinafter referred to as a first buck/boost converter) is composed of the reverse-conducting switching elements 14UU, 14UL, 24UU, and 24UL and the coil 40U. The buck/boost converter which uses the coil 40V (hereinafter referred to as a second buck/boost converter) is composed of the reverse-conducting switching elements 14VU, 14VL, 24VU, and 24VL and the coil 40V. The buck/boost converter which uses the coil 40W (hereafter referred to as a third buck/boost converter) is composed of the reverse-conducting switching elements 14WU, 14WL, 24WU, and 24WL and the coil 40W. The first to third buck/boost converters may operate synchronously or only one or two of them may operate. Since the operations of the first to third buck/boost converters are equal, the first buck/boost converter will be described below.

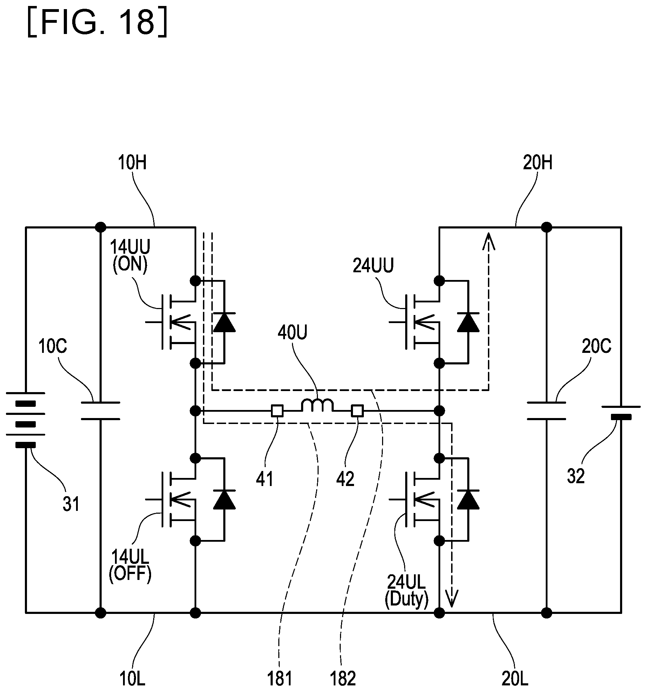

FIG. 18 shows the equivalent circuit of the first buck/boost converter. As shown in FIG. 18, the first battery 31 is connected between the high potential line 10H and the low potential line 10L, and the second battery 32 is connected between the high potential line 20H and the low potential line 20L. By the switching elements 72 and 74 being OFF, the high potential line 10H is isolated from the high potential line 20H. The buck/boost converter can perform a first boost power transfer operation, a first buck power transfer operation, a second boost power transfer operation, and a second buck power transfer operation as non-series power transfer operations. The first boost power transfer operation is an operation of transferring electric power from the first battery 31 to the second battery 32 while boosting the voltage. The first buck power transfer operation is an operation of transferring electric power from the first battery 31 to the second battery 32 while lowering the voltage. The second boost power transfer operation is an operation of transferring electric power from the second battery 32 to the first battery 31 while boosting the voltage. The second buck power transfer operation is an operation of transferring electric power from the second battery 32 to the first battery 31 while lowering the voltage.

As shown in FIG. 18, in the first boost power transfer operation, the control circuit 90 controls the reverse-conducting switching element 14UU to be ON and controls the reverse-conducting switching element 14UL to be OFF. The control circuit 90 also repeatedly turns ON and OFF the reverse-conducting switching element 24UL. The duty ratio of the reverse-conducting switching element 24UL is changed according to a control target value. Over a short time interval, the duty ratio of the reverse-conducting switching element 24UL may be 0% or 100% in some cases. The reverse-conducting switching element 24UU may be controlled in any way as long as it is OFF during the period when the reverse-conducting switching element 24UL is ON. For example, the reverse-conducting switching element 24UU may be constantly OFF, or the reverse-conducting switching element 24UU and the reverse-conducting switching element 24UL may be alternately turned ON.

When the reverse-conducting switching element 24UL is ON, as shown by arrow 181, a current flows from the positive electrode of the first battery 31 to the negative electrode of the second battery 32 via the reverse-conducting switching element 14UU, the coil 40U, and the reverse-conducting switching element 24UL. When the reverse-conducting switching element 24UL is then OFF, an induced electromotive force is generated in the coil 40U in an orientation along which a side of the coil 40U closer to the second connection terminal 42 is high potential. As a result, as shown by arrow 182, a current flows from the positive electrode of the first battery 31 to the positive electrode of the second battery 32 via the reverse-conducting switching element 14UU, the coil 40U, and the diode of the reverse-conducting switching element 24UU. In the first boost power transfer operation, power is transferred from the first battery 31 to the second battery 32 by the current alternately flowing as shown by arrows 181 and 182. Since the voltage obtained by adding the induction voltage generated in the coil 40U to the output voltage of the first battery 31 is applied to the second battery 32, a voltage higher than the output voltage of the first battery 31 is applied to the second battery 32. Thus, the first boost power transfer operation is an operation of transferring electric power from the first battery 31 to the second battery 32 while boosting the voltage.

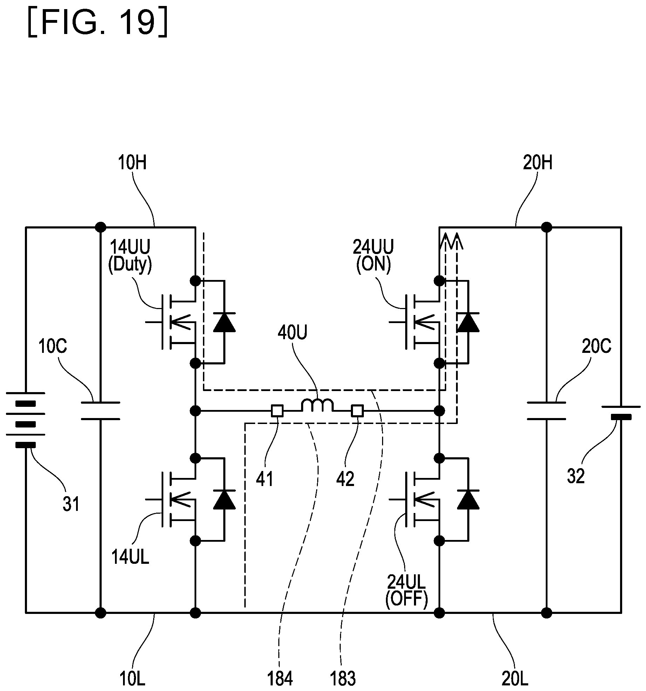

As shown in FIG. 19, in the first buck power transfer operation, the control circuit 90 controls the reverse-conducting switching element 24UU to be ON and controls the reverse-conducting switching element 24UL to be OFF. The control circuit 90 also repeatedly turns ON and OFF the reverse-conducting switching element 14UU. The duty ratio of the reverse-conducting switching element 14UU is changed according to a control target value. Over a short time interval, the duty ratio of the reverse-conducting switching element 14UU may be 0% or 100% in some cases. The reverse-conducting switching element 14UL may be controlled in any way as long as it is OFF during the period when the reverse-conducting switching element 14UU is ON. For example, the reverse-conducting switching element 14UL may be constantly OFF, or the reverse-conducting switching element 14UL and the reverse-conducting switching element 14UU may be alternately turned ON.

When the reverse-conducting switching element 14UU is ON, as shown by arrow 183, a current flows from the positive electrode of the first battery 31 to the positive electrode of the second battery 32 via the reverse-conducting switching element 14UU, the coil 40U, and the reverse-conducting switching element 24UU. When the reverse-conducting switching element 14UU is then OFF, an induced electromotive force is generated in the coil 40U in an orientation along which a side of the coil 40U closer to the second connection terminal 42 is high potential. As a result, as shown by arrow 184, a current flows from the negative electrode of the second battery 32 to the positive electrode of the second battery 32 via the diode of the reverse-conducting switching element 14UL, the coil 40U, and the reverse-conducting switching element 24UU. In the first buck power transfer operation, power is transferred from the first battery 31 to the second battery 32 by the current flowing alternately as shown by arrows 183 and 184. Since the output voltage of the first battery 31 is divided by the coil 40U and the second battery 32, a lower voltage than the output voltage of the first battery 31 is applied to the second battery 32. Thus, the first buck power transfer operation is an operation of transferring electric power from the first battery 31 to the second battery 32 while lowering the voltage.

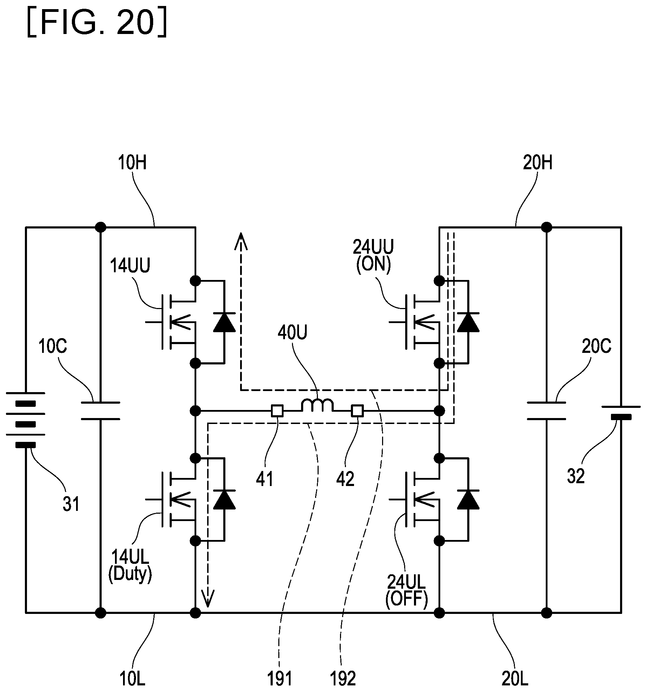

As shown in FIG. 20, in the second boost power transfer operation, the control circuit 90 controls the reverse-conducting switching element 24UU to be ON and controls the reverse-conducting switching element 24UL to be OFF. The control circuit 90 also repeatedly turns ON and OFF the reverse-conducting switching element 14UL. The duty ratio of the reverse-conducting switching element 14UL is changed according to a control target value. Over a short time interval, the duty ratio of the reverse-conducting switching element 14UL may be 0% or 100% in some cases. The reverse-conducting switching element 14UU may be controlled in any way as long as it is OFF during the period when the reverse-conducting switching element 14UL is ON. For example, the reverse-conducting switching element 14UU may be constantly OFF or the reverse-conducting switching element 14UU and the reverse-conducting switching element 14UL may be alternately turned ON.

When the reverse-conducting switching element 14UL is ON, as shown by arrow 191, a current flows from the positive electrode of the second battery 32 to the negative electrode of the second battery 32 via the reverse-conducting switching element 24UU, the coil 40U, and the reverse-conducting switching element 14UL. When the reverse-conducting switching element 14UL is then OFF, an induced electromotive force is generated in the coil 40U in an orientation along which a side of the coil 40U closer to the first connection terminal 41 is high potential. As a result, as shown by arrow 192, a current flows from the positive electrode of the second battery 32 to the positive electrode of the first battery 31 via the reverse-conducting switching element 24UU, the coil 40U, and the diode of the reverse-conducting switching element 14UU. In the second boost power transfer operation, power is transferred from the second battery 32 to the first battery 31 by the current flowing alternately as shown by arrows 191 and 192. Since a voltage obtained by adding the induced voltage generated in the coil 40U to the output voltage of the second battery 32 is applied to the first battery 31, a voltage higher than the output voltage of the second battery 32 is applied to the first battery 31. Thus, the second boost power transfer operation is an operation of transferring electric power from the second battery 32 to the first battery 31 while boosting the voltage.

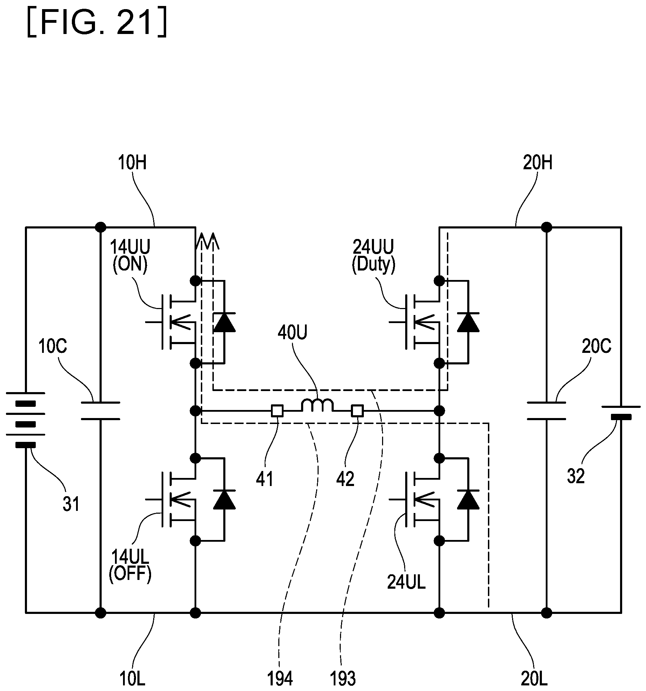

As shown in FIG. 21, in the second buck power transfer operation, the control circuit 90 controls the reverse-conducting switching element 14UU to be ON and controls the reverse-conducting switching element 14UL to be OFF. The control circuit 90 also repeatedly turns ON and OFF the reverse-conducting switching element 24UU. The duty ratio of the reverse-conducting switching element 24UU is changed according to a control target value. Over a short time interval, the duty ratio of the reverse-conducting switching element 24UU may be 0% or 100% in some cases. The reverse-conducting switching element 24UL may be controlled in any way as long as it is OFF during the period when the reverse-conducting switching element 24UU is ON. For example, the reverse-conducting switching element 24UL may be constantly OFF, or the reverse-conducting switching element 24UL and the reverse-conducting switching element 24UU may be alternately turned on.

When the reverse-conducting switching element 24UU is ON, as shown by arrow 193, a current flows from the positive electrode of the second battery 32 to the positive electrode of the first battery 31 via the reverse-conducting switching element 24UU, the coil 40U, and the reverse-conducting switching element 14UU. When the reverse-conducting switching element 24UU is then OFF, an induced electromotive force is generated in the coil 40U in an orientation along which a side of the coil 40U closer to the first connection terminal 41 is high potential. As a result, as shown by arrow 194, a current flows from the negative electrode of the first battery 31 to the positive electrode of the first battery 31 via the diode of the reverse-conducting switching element 24UL, the coil 40U, and the reverse-conducting switching element 14UU. In the second buck power transfer operation, power is transferred from the second battery 32 to the first battery 31 by the current flowing alternately as shown by arrows 193 and 194. Since the output voltage of the second battery 32 is divided by the coil 40U and the first battery 31, a lower voltage than the output voltage of the second battery 32 is applied to the first battery 31. Thus, the second buck power transfer operation is an operation of transferring electric power from the second battery 32 to the first battery 31 while lowering the voltage.

In the non-series power transfer operation, the control circuit 90 performs the first boost power transfer operation, the first buck power transfer operation, the second boost power transfer operation, and the second buck power transfer operation as described above according to a current value and a target value of the output voltage of each battery. When transferring electric power from the first battery 31 to the second battery 32, the control circuit 90 performs the first boost power transfer operation when the target value of the output voltage of the second battery 32 is greater than the current value of the output voltage of the first battery 31, and performs the first buck power transfer operation when the target value of the output voltage of the second battery 32 is equal to or less than the current value of the output voltage of the first battery 31. Also, when transferring electric power from the second battery 32 to the first battery 31, the control circuit 90 performs the second buck power transfer operation when the target value of the output voltage of the second battery 32 is greater than the current value of the output voltage of the first battery 31, and performs the second boost power transfer operation when the target value of the output voltage of the second battery 32 is equal to or less than the current value of the output voltage of the first battery 31.

The control circuit 90 can perform the SOC adjustment operation and the battery warming operation as the non-series power transfer operations.

In the SOC adjustment operation, the control circuit 90 adjusts the SOCs of the first battery 31 and the second battery 32 to target values by transferring electric power between the first battery 31 and the second battery 32. In the SOC adjustment operation, the control circuit 90 may transfer power between the first battery 31 and the second battery 32 from the one with a higher SOC to the one with a lower SOC, or may transfer power from the one with a lower SOC to the one with a higher SOC. In the SOC adjustment operation, the control circuit 90 performs the first boost power transfer operation, the first buck power transfer operation, the second boost power transfer operation, and the second buck power transfer operation, depending on the situation. As exemplified in FIG. 10, in the SOC adjustment operation, the control circuit 90 controls the current such that the current I1 flowing in the first battery 31 and the current I2 flowing in the second battery 32 are approximately constant.

In the battery warming operation, the control circuit 90 alternately transfers power from the first battery 31 to the second battery 32 and from the second battery 32 to the first battery 31. In the power transfer from the first battery 31 to the second battery 32, the control circuit 90 executes the first boost power transfer operation and the first buck power transfer operation depending on the situation. In the power transfer from the second battery 32 to the first battery 31, the control circuit 90 executes the second boost power transfer operation and the second buck power transfer operation according to the situation. For example, as shown in FIG. 11, the control circuit 90 changes the current I1 in the first battery 31 and the current I2 in the second battery 32 to be sinusoidal. When the current is varied in this manner, charging and discharging are repeated in the first battery 31 and the second battery 32, respectively, and the temperatures of the first battery 31 and the second battery 32 rise. If the performance of the batteries 31 and 32 is degraded due to low temperatures, the battery warming operation can restore the performance of the batteries 31 and 32.

The control circuit 90 can perform the parallel charging operation or the parallel power supplying operation together with the non-series power transfer operation (i.e., the SOC adjustment operation or battery warming operation described above). When simultaneously executing the non-series power transfer operation and the parallel charging operation, the control circuit 90 turns ON the relay switches 57 and 58 with external general charging equipment connected to the high potential external connection terminal 80H and low potential external connection terminal 80L, and further executes the non-series power transfer operation (i.e., SOC adjustment operation or battery warming operation). In addition to the current generated by the non-series power transfer operation, the current shown by arrow 160 in FIG. 16 (i.e., current supplied by external general charging equipment) flows. Therefore, when the parallel charging operation and the SOC adjustment operation of the non-series power transfer operation are executed simultaneously, the current I1 and current I2 shift upward by the amount of the current Is supplied externally, as shown in FIG. 12. When the parallel charging operation and the battery warming operation of the non-series power transfer operation are executed simultaneously, the current I1 and current I2 shift upward by the amount of the current Is supplied externally, as shown in FIG. 13. When simultaneously executing the non-series power transfer operation and the parallel power supplying operation, the control circuit 90 turns ON the relay switches 57 and 58 with the external power supplying target equipment connected to the high potential external connection terminal 80H and the low potential external connection terminal 80L, and further executes the non-series power transfer operation (i.e., the SOC adjustment operation or the battery warming operation). Then, in addition to the current generated by the non-series power transfer operation, the current shown by arrow 170 in FIG. 17 (i.e., current supplied to the external power supplying target equipment) flows. Therefore, when the parallel power supplying operation and the SOC adjustment operation of the non-series power transfer operation are executed simultaneously, the current I1 and current I2 shift downward by the amount of the current Is supplied to external, as shown in FIG. 14. When the parallel power supplying operation and the battery warming operation of the non-series power transfer operation are executed simultaneously, the current I1 and current I2 shift downward by the amount of the current Is supplied to external, as shown in FIG. 15.

As described above, the electric circuit of the embodiment is capable of performing the SOC adjustment operation and the battery warming operation while executing the parallel charging operation or the parallel power supplying operation. The control circuit 90 can also perform the non-series power transfer operation (i.e., the SOC adjustment operation or the battery warming operation) alone. In that case, the control circuit 90 controls the relay switches 57 and 58 to be OFF.

The first inverter circuit in the embodiment is an example of an inverter circuit. The series switch circuits 12U, 12V, and 12W in the embodiment are examples of first series switch circuits. The reverse-conducting switching elements 14UU, 14WU, and 14VU in the embodiment are examples of first upper reverse-conducting switching elements. The reverse-conducting switching elements 14UL, 14WL, and 14VL in the embodiment are examples of first lower reverse-conducting switching elements. The second inverter circuit in the embodiment is an example of a switch circuit. The series switch circuits 22U, 22V, and 22W in the embodiment are examples of second series switch circuits. The reverse-conducting switching elements 24UU, 24WU, and 24VU in the embodiment are examples of second upper reverse-conducting switching elements. The reverse-conducting switching elements 24UL, 24WL, and 24VL in the embodiment are examples of second lower reverse-conducting switching elements. Each of the coils 40U, 40V, and 40W in the embodiment is an example of a specific coil. When the coil 40U is regarded as the specific coil, the series switch circuit 12U is an example of a specific first series switch circuit and the series switch circuit 22U is an example of a specific second series switch circuit. When the coil 40V is regarded as the specific coil, the series switch circuit 12V is an example of a specific first series switch circuit and the series switch circuit 22V is an example of a specific second series switch circuit. When the coil 40W is regarded as the specific coil, the series switch circuit 12W is an example of a specific first series switch circuit and the series switch circuit 22W is an example of a specific second series switch circuit.

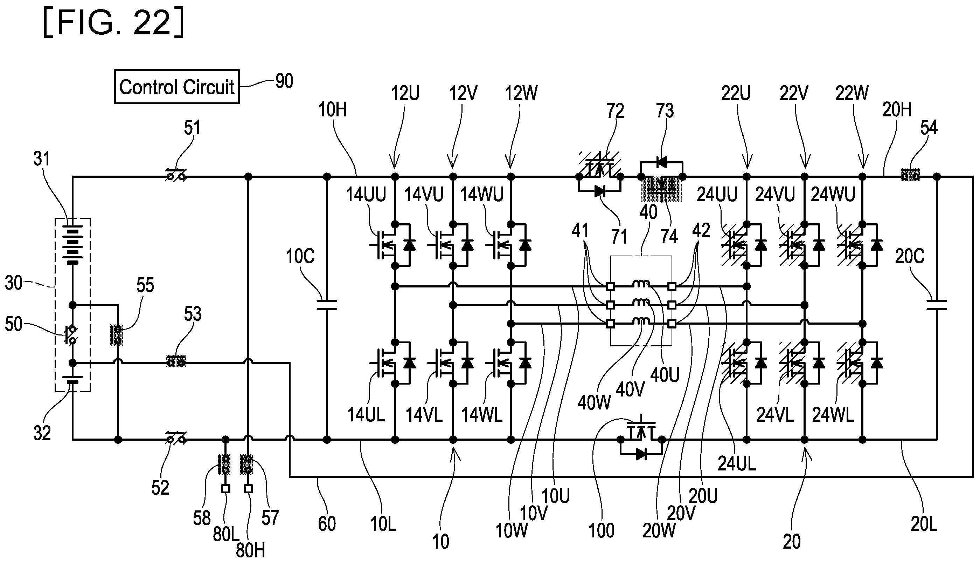

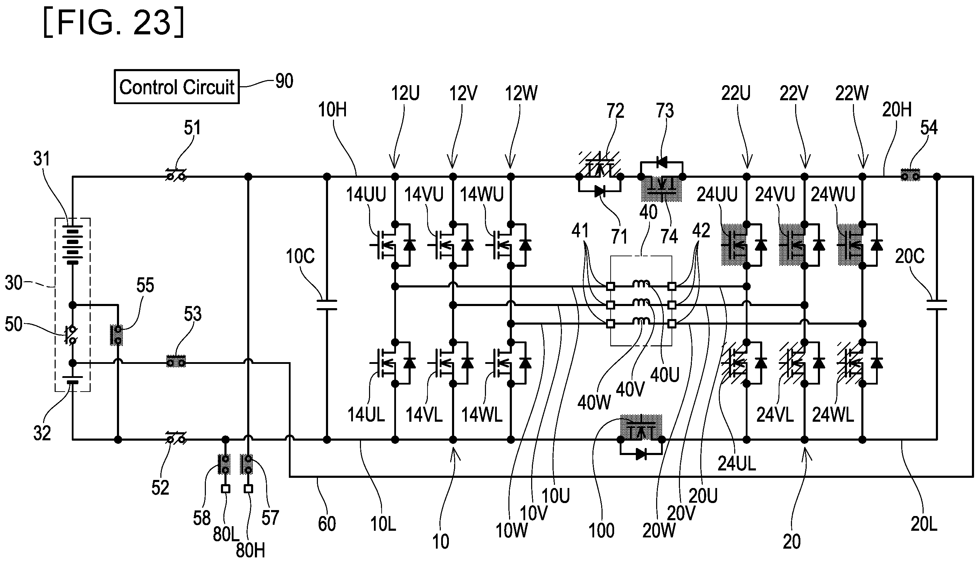

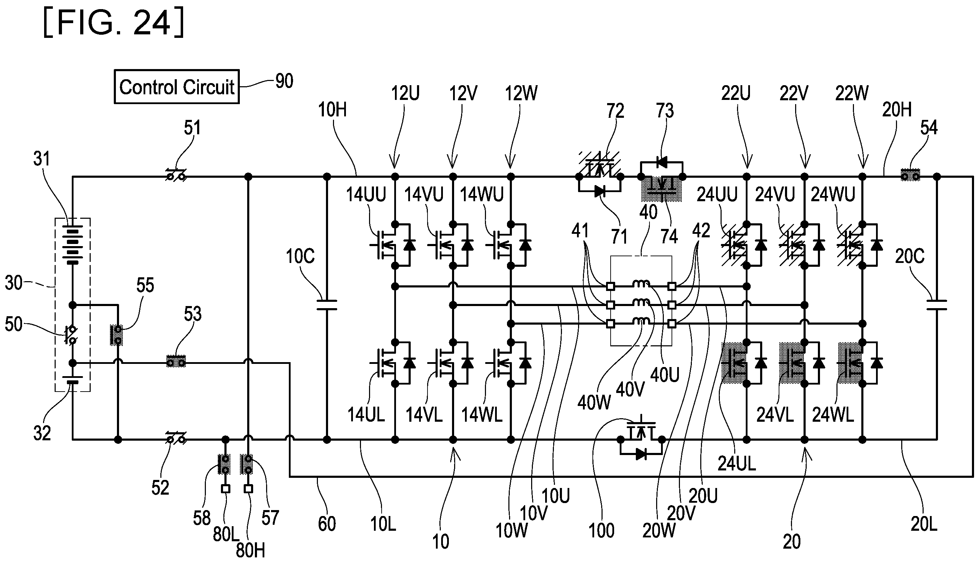

In the electric circuit described above, the low potential line 10L and the low potential line 20L are connected at all times. However, as shown in FIG. 22, a switching element 100 may be disposed between the low potential line 10L and the low potential line 20L to enable the low potential line 10L to be isolated from the low potential line 20L. In this case, in the first inverter operation, a neutral point connecting the second connection terminals 42 of the coils 40U, 40V, and 40W to each other can be formed by various control methods. For example, as shown in FIG. 22, the switching element 100 may be controlled to be OFF and the reverse-conducting switching elements 24UU, 24VU, 24WU, 24UL, 24VL, and 24WL may be controlled to be ON. As shown in FIG. 23, the switching element 100 may be controlled to be OFF, the upper reverse-conducting switching elements 24UU, 24VU, and 24WU may be controlled to be OFF, and the lower reverse-conducting switching elements 24UL, 24VL, and 24WL may be controlled to be ON. As shown in FIG. 24, the upper reverse-conducting switching elements 24UU, 24VU, and 24WU may be controlled to be ON and the lower reverse-conducting switching elements 24UL, 24VL, and 24WL may be controlled to be OFF. In this case, the switching element 100 may be OFF or ON. In any of the control methods shown in FIGS. 22-24, the second connection terminals 42 of the coils 40U, 40V, and 40W can be connected to each other by the second inverter circuit 20. When the switching element 100 is provided, the switching element 100 is ON in the second inverter operation, series power transfer operation, parallel charging operation, parallel power supplying operation, and non-series power transfer operation, and the low potential line 10L and low potential line 20L are short-circuited. In the series charging operation and the series power supplying operation, the switching element 100 may be ON or OFF.

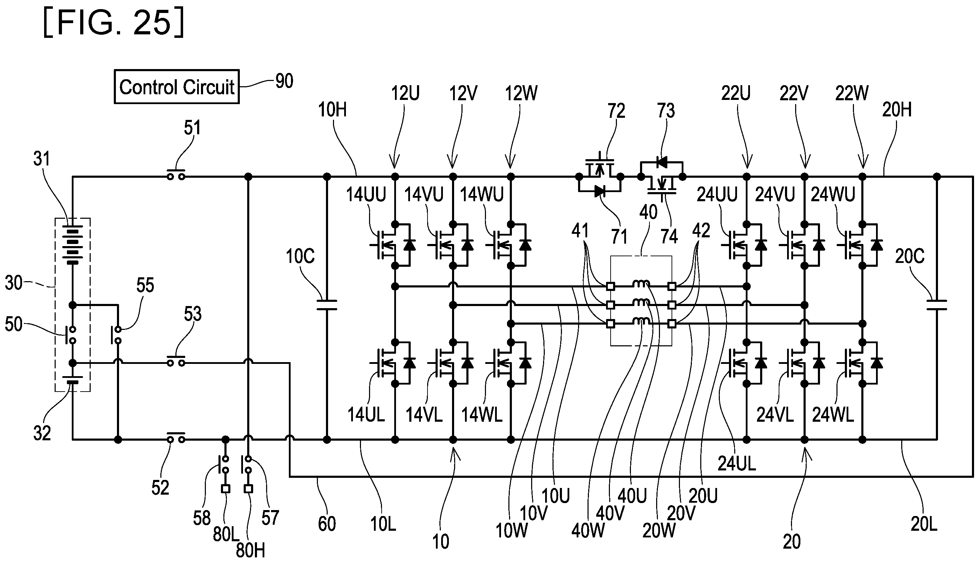

In the embodiments described above, the relay switch 54 is disposed between the high potential line 20H and the wiring 60. However, as shown in FIG. 25, the high potential line 20H may be directly connected to the wiring 60. That is, the smoothing capacitor 20C may be connected between the high potential line 20H and the low potential line 20L at all times. In this configuration, when the first inverter operation is about to be implemented, the potential of the neutral point is difficult to fluctuate because the smoothing capacitor 20C is connected between the neutral point (i.e., the high potential line 20H) and the low potential line 20L. This makes it difficult to properly execute the first inverter operation. However, even with this configuration, it is possible to execute the second inverter operation. That is, the configuration of FIG. 25 is a circuit configuration that can be applied to drive the three-phase motor 40 with the second inverter operation.

Specific examples of the present invention have been described in detail, however, these are mere exemplary indications and thus do not limit the scope of the claims. The art described in the claims includes modifications and variations of the specific examples presented above. Technical features described in the description and the drawings may technically be useful alone or in various combinations, and are not limited to the combinations as originally claimed. Further, the art described in the description and the drawings may concurrently achieve a plurality of aims, and technical significance thereof resides in achieving any one of such aims.

## Claims

1. An electric circuit comprising:
a battery unit comprising a first battery and a second battery;
a three-phase motor comprising three coils comprising a U-phase coil, a V-phase coil, and a W-phase coil, each of the three coils having a first connection terminal arranged at one end thereof and a second connection terminal arranged at another end thereof;
an inverter circuit connected to the battery unit, the first connection terminal of the U-phase coil, the first connection terminal of the V-phase coil, and the first connection terminal of the W-phase coil; and
a switch circuit configured to change connection among the second connection terminal of the U-phase coil, the second connection terminal of the V-phase coil, and the second connection terminal of the W-phase coil,
wherein the inverter circuit comprises:
a first high potential line;
a first low potential line; and
three first series switch circuits respectively arranged for the three coils,
wherein each of the three first series switch circuits comprises a first upper reverse-conducting switching element and a first lower reverse-conducting switching element, the first upper reverse-conducting switching element being a reverse-conducting switching element connected between the first connection terminal of corresponding one of the three coils and the first high potential line, and the first lower reverse-conducting switching element being a reverse-conducting switching element connected between the first connection terminal of the corresponding one of the three coils and the first low potential line,
wherein the switch circuit comprises:
a second high potential line;
a second low potential line; and
at least one second series switch circuit,
wherein each of the at least one second series switch circuit comprises a second upper reverse-conducting switching element and a second lower reverse-conducting switching element, the second upper reverse-conducting switching element being a reverse-conducting switching element connected between the second connection terminal of corresponding one of the three coils and the second high potential line, and the second lower reverse-conducting switching element being a reverse-conducting switching element connected between the second connection terminal of the corresponding one of the three coils and the second low potential line,
one of the three coils is a specific coil, one of the three first series switch circuits that is connected to the specific coil is a specific first series switch circuit, one of the at least one second series switch circuit that is connected to the specific coil is a specific second series switch circuit,
the electric circuit is configured to execute a first boost power transfer operation and a second boost power transfer operation,
the first boost power transfer operation is an operation of transferring electric power from the first battery to the second battery by repeating ON and OFF of the second lower reverse-conducting switching element of the specific second series switch circuit in a state in which: a positive electrode of the first battery is connected to the first high potential line, a negative electrode of the first battery is connected to the first low potential line and the second low potential line, a positive electrode of the second battery is connected to the second high potential line, a negative electrode of the second battery is connected to the first low potential line and the second low potential line, the first upper reverse-conducting switching element of the specific first series switch circuit is ON, and the first lower reverse-conducting switching element of the specific first series switch circuit is OFF, and
the second boost power transfer operation is an operation of transferring electric power from the second battery to the first battery by repeating ON and OFF of the first lower reverse-conducting switching element of the specific first series switch circuit in a state in which: the positive electrode of the first battery is connected to the first high potential line, the negative electrode of the first battery is connected to the first low potential line and the second low potential line, the positive electrode of the second battery is connected to the second high potential line, the negative electrode of the second battery is connected to the first low potential line and the second low potential line, the second upper reverse-conducting switching element of the specific second series switch circuit is ON, and the second lower reverse-conducting switching element of the specific second series switch circuit is OFF.

2. The electric circuit according to claim 1, wherein the electric circuit is configured to execute a first inverter operation, and
the first inverter operation is an operation of supplying an alternating current to the three-phase motor by the inverter circuit in a state in which the second connection terminal of the U-phase coil, the second connection terminal of the V-phase coil, and the second connection terminal of the W-phase coil are short-circuited by the switch circuit.

3. The electric circuit according to claim 2, wherein, in the first inverter operation, the positive electrode of the first battery is connected to the first high potential line, the negative electrode of the first battery is connected to the positive electrode of the second battery, and the negative electrode of the second battery is connected to the first low potential line.

4. The electric circuit according to claim 2 or 3, wherein in the first inverter operation, the positive electrode of the second battery is insulated from the second high potential line.

5. The electric circuit according to claim 1 or 2, wherein the switch circuit comprises three second series switch circuits respectively arranged for the three coils.

6. The electric circuit according to claim 5, wherein the electric circuit is configured to execute a second inverter operation, and
the second inverter operation is an operation of supplying an alternating current to the three-phase motor by controlling a current of the U-phase coil by the first series switch circuit and the second series switch circuit that are connected to the U-phase coil, controlling a current of the V-phase coil by the first series switch circuit and the second series switch circuit that are connected to the V-phase coil, and controlling a current of the W-phase coil by the first series switch circuit and the second series switch circuit that are connected to the W-phase coil, in a state in which the first high potential line is connected to the second high potential line and the first low potential line is connected to the second low potential line.

7. The electric circuit according to claim 2 or 3, wherein the switch circuit comprises three second series switch circuits respectively arranged for the three coils, and
in the first inverter operation, the second upper reverse-conducting switching element of each of the three second series switch circuits is ON and the second lower reverse-conducting switching element of each of the three second series switch circuits is OFF.

8. The electric circuit according to claim 2 or 3, wherein the switch circuit comprises three second series switch circuits respectively arranged for the three coils,
the electric circuit further comprises a low potential line switch connected between the first low potential line and the second low potential line, and
in the first inverter operation, the second upper reverse-conducting switching element of each of the three second series switch circuits is ON, the second lower reverse-conducting switching element of each of the three second series switch circuits is ON, and the low potential line switch is OFF.

9. The electric circuit according to claim 2 or 3, wherein the switch circuit comprises three second series switch circuits respectively arranged for the three coils,
the electric circuit further comprises a low potential line switch connected between the first low potential line and the second low potential line, and
in the first inverter operation, the second upper reverse-conducting switching element of each of the three second series switch circuits is OFF, the second lower reverse-conducting switching element of each of the three second series switch circuits is ON, and the low potential line switch is OFF.

10. The electric circuit according to claim 2 or 3, further comprising:
a first diode and a second diode connected in series between the first high potential line and the second high potential line;
a first switch connected in parallel with the first diode; and
a second switch connected in parallel with the second diode,
wherein the first diode is arranged in an orientation along which a side of the first diode closer to the first high potential line is an anode,
the second diode is arranged in an orientation along which a side of the second diode closer to the first high potential line is a cathode,
the switch circuit comprises three second series switch circuits respectively arranged for the three coils,
the electric circuit is configured to execute a second inverter operation,
the second inverter operation is an operation of supplying an alternating current to the three-phase motor by controlling a current of the U-phase coil by the first series switch circuit and the second series switch circuit that are connected to the U-phase coil, controlling a current of the V-phase coil by the first series switch circuit and the second series switch circuit that are connected to the V-phase coil, and controlling a current of the W-phase coil by the first series switch circuit and the second series switch circuit that are connected to the W-phase coil, in a state in which the first high potential line is connected to the second high potential line and the first low potential line is connected to the second low potential line,
in the second inverter operation, the first switch and the second switch are ON, and
in the first inverter operation, the first switch is ON and the second switch is OFF, or the first switch and the second switch are OFF.

11. The electric circuit according to claim 1 or 2, further comprising:
a high potential external connection terminal; and
a low potential external connection terminal,
wherein the electric circuit is configured to execute a parallel charge/discharge operation, and
the parallel charge/discharge operation is an operation of performing at least one of charging and discharging electric power in parallel to the first battery and the second battery via the high potential external connection terminal and the low potential external connection terminal in a state in which:
the positive electrode of the first battery is connected to the high potential external connection terminal via the first high potential line,
the negative electrode of the first battery is connected to the low potential external connection terminal via the first low potential line,
the positive electrode of the second battery is connected to the high potential external connection terminal via the second high potential line, and
the negative electrode of the second battery is connected to the low potential external connection terminal via the first low potential line.

12. The electric circuit according to claim 11, wherein at least one of the first boost power transfer operation and the second boost power transfer operation is executable simultaneously with the parallel charge/discharge operation.

13. The electric circuit according to claim 1 or 2, further comprising:
a high potential external connection terminal; and
a low potential external connection terminal,
wherein the electric circuit is configured to execute a series charge/discharge operation, and
the series charge/discharge operation is an operation of performing at least one of charging and discharging electric power in series to the first battery and the second battery via the high potential external connection terminal and the low potential external connection terminal in a state in which:
the positive electrode of the first battery is connected to the high potential external connection terminal via the first high potential line,
the negative electrode of the first battery is connected to the positive electrode of the second battery, and
the negative electrode of the second battery is connected to the low potential external connection terminal via the first low potential line.

14. The electric circuit according to claim 1 or 2, wherein the electric circuit is configured to execute a battery warming operation of increasing temperatures of the first battery and the second battery by alternately repeating the first boost power transfer operation and the second boost power transfer operation.

15. The electric circuit according to claim 1 or 2, wherein the electric circuit is configured to execute an SOC adjustment operation of adjusting states of charge of the first battery and the second battery by executing at least one of the first boost power transfer operation and the second boost power transfer operation.

16. The electric circuit according to claim 1 or 2, wherein, in the first boost power transfer operation, the second lower reverse-conducting switching element of the specific second series switch circuit and the second upper reverse-conducting switching element of the specific second series switch circuit are alternately turned ON.

17. The electric circuit according to claim 1 or 2, wherein, in the first boost power transfer operation, the second upper reverse-conducting switching element of the specific second series switch circuit is maintained OFF.

18. The electric circuit according to claim 1 or 2, wherein, in the second boost power transfer operation, the first lower reverse-conducting switching element of the specific first series switch circuit and the first upper reverse-conducting switching element of the specific first series switch circuit are alternately turned ON.

19. The electric circuit according to claim 1 or 2, wherein, in the second boost power transfer operation, the first upper reverse-conducting switching element of the specific first series switch circuit is maintained OFF.

20. A program configured to be executed by an electric circuit which comprises:
a battery unit comprising a first battery and a second battery;
a three-phase motor comprising three coils comprising a U-phase coil, a V-phase coil, and a W-phase coil, each of the three coils having a first connection terminal arranged at one end thereof and a second connection terminal arranged at another end thereof;
an inverter circuit connected to the battery unit, the first connection terminal of the U-phase coil, the first connection terminal of the V-phase coil, the first connection terminal of the W-phase coil; and
a switch circuit configured to change connection among the second connection terminal of the U-phase coil, the second connection terminal of the V-phase coil, and the second connection terminal of the W-phase coil,
wherein the inverter circuit comprises:
a first high potential line;
a first low potential line; and
three first series switch circuits respectively arranged for the three coils,
wherein each of the three first series switch circuits comprises a first upper reverse-conducting switching element and a first lower reverse-conducting switching element, the first upper reverse-conducting switching element being a reverse-conducting switching element connected between the first connection terminal of corresponding one of the three coils and the first high potential line, and the first lower reverse-conducting switching element being a reverse-conducting switching element connected between the first connection terminal of the corresponding one of the three coils and the first low potential line,
wherein the switch circuit comprises:
a second high potential line;
a second low potential line; and
at least one second series switch circuit,
wherein each of the at least one second series switch circuit comprises a second upper reverse-conducting switching element and a second lower reverse-conducting switching element, the second upper reverse-conducting switching element being a reverse-conducting switching element connected between the second connection terminal of corresponding one of the three coils and the second high potential line, and the second lower reverse-conducting switching element being a reverse-conducting switching element connected between the second connection terminal of the corresponding one of the three coils and the second low potential line,
one of the three coils is a specific coil, one of the three first series switch circuits that is connected to the specific coil is a specific first series switch circuit, and one of the at least one second series switch circuit that is connected to the specific coil is a specific second series switch circuit,
wherein the program causes a control circuit to execute a first boost power transfer operation and a second boost power transfer operation,
the first boost power transfer operation being an operation of transferring electric power from the first battery to the second battery by repeating ON and OFF of the second lower reverse-conducting switching element of the specific second series switch circuit in a state in which: a positive electrode of the first battery is connected to the first high potential line, a negative electrode of the first battery is connected to the first low potential line and the second low potential line, a positive electrode of the second battery is connected to the second high potential line, a negative electrode of the second battery is connected to the first low potential line and the second low potential line, the first upper reverse-conducting switching element of the specific first series switch circuit is ON, and the first lower reverse-conducting switching element of the specific first series switch circuit is OFF, and
the second boost power transfer operation is an operation of transferring electric power from the second battery to the first battery by repeating ON and OFF of the first lower reverse-conducting switching element of the specific first series switch circuit in a state in which: the positive electrode of the first battery is connected to the first high potential line, the negative electrode of the first battery is connected to the first low potential line and the second low potential line, the positive electrode of the second battery is connected to the second high potential line, the negative electrode of the second battery is connected to the first low potential line and the second low potential line, the second upper reverse-conducting switching element of the specific second series switch circuit is ON, and the second lower reverse-conducting switching element of the specific second series switch circuit is OFF.
